# EUROPEAN PATENT SPECIFICATION

(11) **EP 3 275 936 B1**
(45) Date of publication and mention of the grant of the patent: **11.12.2019**
(21) Application number: 16772414.5
(22) Date of filing: 18.03.2016
(51) Int. Cl.: C08L 69/00, C08K 3/04, C08K 3/22, C08K 5/42, C08K 9/04, C08L 27/18, C08L 83/04, H02S 40/34

(54) **POLYCARBONATE RESIN COMPOSITION, MOLDED ARTICLE, AND STRUCTURAL MEMBER FOR SOLAR POWER GENERATION**
POLYCARBONATHARZZUSAMMENSETZUNG, FORMKÖRPER UND STRUKTURELEMENT FÜR SOLARSTROMERZEUGUNG
COMPOSITION DE RÉSINE POLYCARBONATE, ARTICLE MOULÉ, ET ÉLÉMENT STRUCTURAL POUR LA GÉNÉRATION D'ÉNERGIE SOLAIRE

(30) Priority: 27.03.2015 JP 2015067419
(43) Date of publication of application: 31.01.2018
(73) Proprietor: Idemitsu Kosan Co.,Ltd., Tokyo 100-8321 (JP)
(72) Inventor: AOKI, Yusuke, TAIPEI R.O.C. (TW); MOGI, Yasuhiro, Ichihara-shi Chiba 299-0193 (JP)
(74) Representative: Hoffmann Eitle
(86) International application number: PCT/JP2016/058859
(87) International publication number: WO 2016/158532

(56) References cited:
- JP-A- 2006 124 517
- JP-A- 2012 102 179
- JP-A- 2014 185 261
- US-A1- 2010 144 939
- US-A1- 2012 248 102
- US-A1- 2013 303 672

## Description

### TECHNICAL FIELD

The present invention relates to a polycarbonate resin composition, a molded article obtained by molding the resin composition, and a structure member for solar photovoltaic power generation formed of the molded article.

### BACKGROUND ART

Solar photovoltaic power generation modules that convert solar energy into electrical energy may lose their power-generating abilities owing to, for example, defective connection between the modules or a reduction in quantity of sunlight due to the occurrence of a partial shadow in any one of the modules. A junction box for solar photovoltaic power generation (including a connector) serves to prevent the power-down of an entire system due to such loss of the power-generating abilities.

Here, a structure member for solar photovoltaic power generation, such as the junction box for solar photovoltaic power generation, has been required to have characteristics such as a high degree of impact characteristic, surface dielectric breakdown-resisting characteristic, and flame retardancy, because the structure member is typically placed outdoors. In addition, requisites for a material of the structure member have become more and more sophisticated in association with demands for the thinning and design of the structure member for solar photovoltaic power generation.

A polycarbonate-polyorganosiloxane (hereinafter sometimes referred to as "PC-POS") copolymer, which is a polycarbonate-based material, has been known as a resin material having a high degree of low-temperature impact characteristic. However, when the PC-POS copolymer alone is used as a structure member for solar photovoltaic power generation, the structure member is poor in tracking resistance and is hence inconvenient unless the structure member is treated.

In view of the foregoing, in order that a PC-POS copolymer may be formed into a polycarbonate resin composition excellent in tracking resistance and flame retardancy without the impairment of its low-temperature impact characteristic, in Patent Literature 1, there is a disclosure of a resin composition obtained by blending a PC-POS copolymer with an alkaline metal salt of an organic sulfonic acid, a polytetrafluoroethylene having a fibril-forming ability, and titanium dioxide particles each having a specific coating layer.

In addition, in order that the flame retardancy of a polycarbonate resin used as a resin material for various structure members may be improved, a resin composition blended with a silsesquioxane serving as a flame retardant has been known (see, for example, Patent Literatures 2 to 4).

### CITATION LIST

### PATENT LITERATURE

PTL 1: JP 2012-102179 A
PTL 2: JP 2011-63638 A
PTL 3: JP 2004-510869 A
PTL 4: JP 5392775 B2

### SUMMARY OF INVENTION

### TECHNICAL PROBLEM

In each of Patent Literatures 1 to 4, the flame retardancy of the polycarbonate resin composition has been improved. However, there has been a growing demand for the thinning of a structure member for solar photovoltaic power generation, and the flame retardancy is not enough for the composition to be used in such thin member. Accordingly, a further improvement in flame retardancy has been required. In addition, in Patent Literatures 2 to 4, no investigations have been made on a high degree of impact characteristic. Further, when the blending amount of the silsesquioxane used as a flame retardant in each of Patent Literatures 2 to 4 is merely increased for improving the flame retardancy of the composition in such thin member, the surface dielectric breakdown-resisting characteristic of the composition may reduce. Accordingly, it is assumed that the composition cannot be excellent in all of an impact characteristic, a surface dielectric breakdown-resisting characteristic, and flame retardancy.

An object to be achieved by the present invention is to provide a polycarbonate resin composition excellent in all of an impact characteristic, a surface dielectric breakdown-resisting characteristic, and flame retardancy, and a molded article obtained by molding the resin composition, and a structure member for solar photovoltaic power generation formed of the molded article.

### SOLUTION TO PROBLEM

The inventors of the present invention have found that the object can be achieved by blending a resin component mainly formed of a specific PC-POS copolymer with specific amounts of an organic acid metal salt, a polytetrafluoroethylene having a fibril-forming ability, titanium dioxide, and carbon black, and further blending the component with a specific amount of a silsesquioxane. Thus, the inventors have completed the present invention.

That is, the present invention provides the following items <1> to <13>.
<1> A polycarbonate resin composition, comprising:
   (A) 100 parts by mass of a resin mixture formed of
      30 mass% to 100 mass% of a polycarbonate-polyorganosiloxane copolymer (A-1) having a repeating unit represented by the general formula (I) and a repeating unit represented by the general formula (II), and having an average chain length n of a polyorganosiloxane moiety of from 70 to 500, and
      70 mass% to 0 mass% of an aromatic polycarbonate resin (A-2) except the polycarbonate-polyorganosiloxane copolymer (A-1);
   (B) 0.08 part by mass to 0.3 part by mass of a silsesquioxane;
   (C) 0.05 part by mass to 0.2 part by mass of an alkaline metal salt and/or an alkaline earth metal salt of an organic sulfonic acid;
   (D) 0 parts by mass to 0.3 part by mass of a polytetrafluoroethylene having a fibril-forming ability;
   (E) 1 part by mass to 10 parts by mass of titanium dioxide; and
   (F) 0.1 part by mass to 3 parts by mass of carbon black: 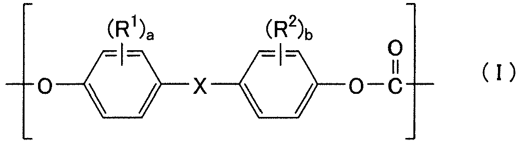 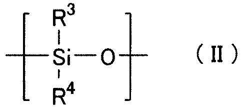 wherein
      in the formula (I), R¹ and R² each independently represent an alkyl group or alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, -S-, -SO-, -SO₂-, -O-, or -CO-, and a and b each independently represent an integer of from 0 to 4, and
      in the formula (II), R³ and R⁴ each independently represent a hydrogen atom, a halogen atom, an alkyl group having 1 to 6 carbon atoms, an alkoxy group having 1 to 6 carbon atoms, or an aryl group having 6 to 12 carbon atoms.
<2> The polycarbonate resin composition according to the above-mentioned item <1>, further comprising (G) 0.01 part by mass to 1 part by mass of an antioxidant with respect to 100 parts by mass of (A) the resin mixture.
<3> The polycarbonate resin composition according to the above-mentioned item <2>, wherein (G) the antioxidant comprises a phosphorus-based antioxidant.
<4> The polycarbonate resin composition according to any one of the above-mentioned items <1> to <3>, further comprising (H) 0.01 part by mass to 1 part by mass of a polyorganosiloxane with respect to 100 parts by mass of (A) the resin mixture.
<5> The polycarbonate resin composition according to any one of the above-mentioned items <1> to <4>, wherein a content of the polyorganosiloxane moiety serving as the repeating unit represented by the general formula (II) in the polycarbonate-polyorganosiloxane copolymer (A-1) is from 5 mass% to 20 mass%.
<6> The polycarbonate resin composition according to any one of the above-mentioned items <1> to <5>, wherein a content of the polyorganosiloxane moiety serving as the repeating unit represented by the general formula (II) in (A) the resin mixture is from 1 mass% to 20 mass%.
<7> The polycarbonate resin composition according to any one of the above-mentioned items <1> to <6>, wherein the polycarbonate-polyorganosiloxane copolymer (A-1) has a viscosity-average molecular weight of from 12,000 to 30,000.
<8> The polycarbonate resin composition according to any one of the above-mentioned items <1> to <7>, wherein (E) the titanium dioxide comprises titanium dioxide particles each having, on an outermost surface thereof, a coating layer formed of a polyol free of a nitrogen atom.
<9> The polycarbonate resin composition according to the above-mentioned item <8>, wherein the polyol free of a nitrogen atom comprises at least one kind selected from the group consisting of trimethylolpropane, trimethylolethane, ditrimethylolpropane, trimethylolpropane ethoxylate, and pentaerythritol.
<10> The polycarbonate resin composition according to any one of the above-mentioned items <1> to <9>, wherein (C) the alkaline metal salt and/or alkaline earth metal salt of the organic sulfonic acid comprises sodium *p*-toluenesulfonate.
<11> The polycarbonate resin composition according to any one of the above-mentioned items <1> to <10>, wherein a mass ratio "(B)/(C)" of (B) the silsesquioxane to (C) the alkaline metal salt and/or the alkaline earth metal salt of the organic sulfonic acid is from 70/30 to 50/50.
<12> A molded article, comprising the polycarbonate resin composition of any one of the above-mentioned items <1> to <11>.
<13> A structure member for solar photovoltaic power generation, comprising the molded article of the above-mentioned item <12>.

### ADVANTAGEOUS EFFECTS OF INVENTION

The polycarbonate resin composition of the present invention is excellent in all of an impact characteristic, a surface dielectric breakdown-resisting characteristic (tracking resistance), and flame retardancy, is excellent particularly in impact characteristic at a temperature as low as -40°C, and has such extremely excellent flame retardancy as to be capable of achieving the rank "V-0" in the UL standard 94 even when the composition is as thin as 0.7 mm. Accordingly, a molded article obtained by molding the resin composition is suitable for use in the application of a structure member for solar photovoltaic power generation.

### DESCRIPTION OF EMBODIMENTS

The present invention is described below. In this description, the term "from A to B" concerning the description of a numerical value means "A or more and B or less" (when A<B) or "A or less and B or more" (when A>B). In addition, in the present invention, a combination of preferred modes is a more preferred mode.

### [Polycarbonate Resin Composition]

A polycarbonate resin composition of the present invention comprises: (A) 100 parts by mass of a resin mixture formed of a polycarbonate-polyorganosiloxane copolymer (A-1) having a repeating unit represented by the general formula (I) and a repeating unit represented by the general formula (II), and having an average chain length n of a polyorganosiloxane moiety of from 70 to 500, and an aromatic polycarbonate resin (A-2) except the polycarbonate-polyorganosiloxane copolymer (A-1); (B) a silsesquioxane; (C) an alkaline metal salt and/or an alkaline earth metal salt of an organic sulfonic acid; (D) a polytetrafluoroethylene having a fibril-forming ability; (E) titanium dioxide; and (F) carbon black.

In addition, the polycarbonate resin composition of the present invention may further comprise (G) an antioxidant, (H) a polyorganosiloxane, or any other additive.

Each component in the polycarbonate resin composition of the present invention is described below. In this description, "(A) the resin mixture" may be referred to as "component (A)" or "resin component", the "polycarbonate-polyorganosiloxane copolymer (A-1)" may be referred to as "component (A-1)", the "aromatic polycarbonate resin (A-2) except the polycarbonate-polyorganosiloxane copolymer (A-1)" may be referred to as "component (A-2)", "(B) the silsesquioxane" may be referred to as "component (B)", "(C) the alkaline metal salt and/or the alkaline earth metal salt of the organic sulfonic acid" may be referred to as "component (C)", "(D) the polytetrafluoroethylene having a fibril-forming ability" may be referred to as "component (D)", "(E) the titanium dioxide" may be referred to as "component (E)", "(F) the carbon black" may be referred to as "component (F)", "(G) the antioxidant" may be referred to as "component (G)", and "(H) the polyorganosiloxane" may be referred to as "component (H)".

### [(A) Resin Mixture]

(A) The resin mixture is formed of the polycarbonate-polyorganosiloxane (PC-POS) copolymer (A-1) having specific repeating units and the aromatic polycarbonate resin (A-2) except the polycarbonate-polyorganosiloxane (PC-POS) copolymer (A-1).

### <PC-POS Copolymer (A-1)>

The PC-POS copolymer (A-1) to be used in the present invention is a polycarbonate-polyorganosiloxane copolymer having a repeating unit represented by the general formula (I) and a repeating unit represented by the general formula (II), and having an average chain length n of a polyorganosiloxane moiety of from 70 to 500: 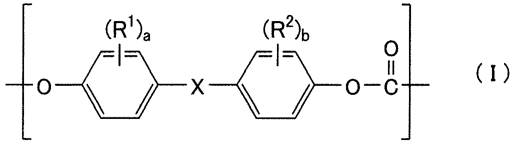 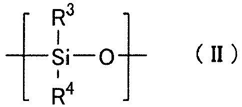 wherein
in the formula (I), R¹ and R² each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, -SO₂-, -O-, or -CO-, and a and b each independently represent an integer of from 0 to 4, and
in the formula (II), R³ and R⁴ each independently represent a hydrogen atom, a halogen atom, an alkyl group having 1 to 6 carbon atoms, an alkoxy group having 1 to 6 carbon atoms, or an aryl group having 6 to 12 carbon atoms.

In the general formula (I), examples of the halogen atom that R¹ and R² each independently represent include a fluorine atom, a chlorine atom, a bromine atom, and an iodine atom.

Examples of the alkyl group that R¹ and R² each independently represent include a methyl group, an ethyl group, a *n*-propyl group, an isopropyl group, various butyl groups (the term "various" means that a linear group and all kinds of branched groups are included, and in this description, the same holds true for the following), various pentyl groups, and various hexyl groups. Examples of the alkoxy group that R¹ and R² each independently represent include groups whose alkyl group moieties are the alkyl groups described above.

Examples of the alkylene group represented by X include a methylene group, an ethylene group, a trimethylene group, a tetramethylene group, and a hexamethylene group. Among them, an alkylene group having 1 to 5 carbon atoms is preferred. Examples of the alkylidene group represented by X include an ethylidene group and an isopropylidene group. Examples of the cycloalkylene group represented by X include a cyclopentanediyl group, a cyclohexanediyl group, and a cyclooctanediyl group. Among them, a cycloalkylene group having 5 to 10 carbon atoms is preferred. Examples of the cycloalkylidene group represented by X include a cyclohexylidene group, a 3,5,5-trimethylcyclohexylidene group, and a 2-adamantylidene group. Among them, a cycloalkylidene group having 5 to 10 carbon atoms is preferred, and a cycloalkylidene group having 5 to 8 carbon atoms is more preferred. Examples of the aryl moiety of the arylalkylene group represented by X include aryl groups each having 6 to 14 ring-forming carbon atoms, such as a phenyl group, a naphthyl group, a biphenyl group, and an anthryl group. Examples of the aryl moiety of the arylalkylidene group represented by X include aryl groups each having 6 to 14 ring-forming carbon atoms, such as a phenyl group, a naphthyl group, a biphenyl group, and an anthryl group.
a and b each independently represent an integer of from 0 to 4, preferably from 0 to 2, more preferably 0 or 1.

Among them, a repeating unit in which a and b each represent 0, and X represents a single bond or an alkylene group having 1 to 8 carbon atoms, or a repeating unit in which a and b each represent 0, and X represents an alkylene group having 3 carbon atoms, in particular an isopropylidene group is suitable.

In the general formula (II), examples of the halogen atom represented by R³ or R⁴ include a fluorine atom, a chlorine atom, a bromine atom, and an iodine atom. Examples of the alkyl group represented by R³ or R⁴ include a methyl group, an ethyl group, a *n*-propyl group, an isopropyl group, various butyl groups (the term "various" means that a linear group and all kinds of branched groups are included, and the same holds true for the following), various pentyl groups, and various hexyl groups. Examples of the alkoxy group represented by R³ or R⁴ include groups whose alkyl group moieties are the alkyl groups described above. Examples of the aryl group represented by R³ or R⁴ include a phenyl group and a naphthyl group.

R³ and R⁴ each preferably represent a hydrogen atom, an alkyl group having 1 to 6 carbon atoms, an alkoxy group having 1 to 6 carbon atoms, or an aryl group having 6 to 12 carbon atoms, and each more preferably represent a methyl group.

In the present invention, the average chain length n of the polyorganosiloxane moiety is from 70 to 500, preferably from 80 to 350, more preferably from 85 to 200. When the average chain length n of the polyorganosiloxane moiety is 70 or more, a sufficient impact characteristic and a sufficient surface dielectric breakdown-resisting characteristic are obtained, and when the average chain length n is 500 or less, sufficient flame retardancy is obtained. The value for the average chain length n is a value calculated by ¹H-NMR.

The content of the polyorganosiloxane moiety serving as the repeating unit represented by the general formula (II) in the PC-POS copolymer (A-1) is preferably from 5 mass% to 20 mass%, more preferably from 5 mass% to 15 mass%, still more preferably from 5 mass% to 10 mass%. When the content is 5 mass% or more, an improving effect on the impact characteristic of the composition is sufficient, and when the content is 20 mass% or less, the composition has sufficient heat resistance.

In addition, the content of a polycarbonate moiety serving as the repeating unit represented by the general formula (I) in the PC-POS copolymer (A-1) is preferably from 95 mass% to 80 mass%, more preferably from 95 mass% to 85 mass%, still more preferably from 95 mass% to 90 mass%.

The content of a repeating unit in the PC-POS copolymer (A-1) is a value calculated by nuclear magnetic resonance (NMR) measurement.

In addition, the content of the polyorganosiloxane moiety serving as the repeating unit represented by the general formula (II) in (A) the resin mixture formed of the component (A-1) and the component (A-2) is preferably from 1 mass% to 20 mass%, more preferably from 2 mass% to 15 mass%, still more preferably from 3 mass% to 10 mass%. When the content is 1 mass% or more, the improving effect on the impact characteristic is sufficient, and when the content is 20 mass% or less, the composition has sufficient heat resistance.

The viscosity-average molecular weight (Mv) of the PC-POS copolymer (A-1) is preferably from 12,000 to 30,000, more preferably from 14,000 to 25,000, still more preferably from 16,000 to 20,000 from the viewpoint of a balance between the strength and processability of a molded article. The viscosity-average molecular weight (Mv) is a value calculated from Schnell's equation ([η]=1.23×10⁻⁵×Mv^{0.83}) by measuring the limiting viscosity [η] of a methylene chloride solution (concentration: g/L) at 20°C.

More specifically, a polyorganosiloxane block containing the repeating unit represented by the general formula (II) preferably has a repeating unit represented by any one of the following general formulae (II-I) to (II-III): 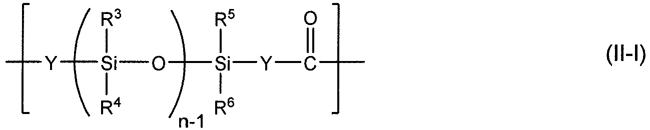 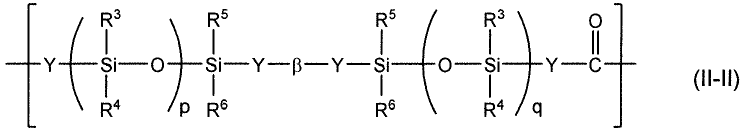 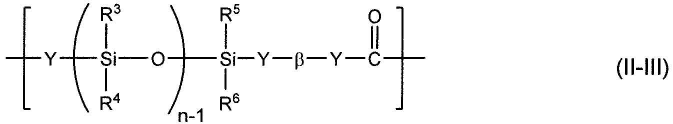 wherein R³ to R⁶ each independently represent a hydrogen atom, a halogen atom, an alkyl group having 1 to 6 carbon atoms, an alkoxy group having 1 to 6 carbon atoms, or an aryl group having 6 to 12 carbon atoms, and a plurality of R³'s, R⁴'s, R⁵'s, or R⁶'s may be identical to or different from each other, Y represents -R⁷O-, -R⁷COO-, -R⁷NH-, -R⁷NR⁸-, -COO-, -S-, -R⁷COO-R⁹-O-, or -R⁷O-R¹⁰-O-, and a plurality of Y's may be identical to or different from each other, the R⁷ represents a single bond, a linear, branched, or cyclic alkylene group, an aryl-substituted alkylene group, a substituted or unsubstituted arylene group, or a diarylene group, R⁸ represents an alkyl group, an alkenyl group, an aryl group, or an aralkyl group, R⁹ represents a diarylene group, R¹⁰ represents a linear, branched, or cyclic alkylene group, or a diarylene group, β represents a divalent group derived from a diisocyanate compound, or a divalent group derived from a dicarboxylic acid or a halide of a dicarboxylic acid, n represents the average chain length of the polyorganosiloxane moiety and represents from 70 to 500, and p and q each represent an integer of 1 or more, and the sum of p and q is n-2.

Examples of the halogen atom that R³ to R⁶ each independently represent include a fluorine atom, a chlorine atom, a bromine atom, and an iodine atom. Examples of the alkyl group that R³ to R⁶ each independently represent include a methyl group, an ethyl group, a *n*-propyl group, an isopropyl group, various butyl groups, various pentyl groups, and various hexyl groups. Examples of the alkoxy group that R³ to R⁶ each independently represent include groups whose alkyl group moieties are the alkyl groups described above. Examples of the aryl group that R³ to R⁶ each independently represent include a phenyl group and a naphthyl group.

R³ to R⁶ each preferably represent a hydrogen atom, an alkyl group having 1 to 6 carbon atoms, an alkoxy group having 1 to 6 carbon atoms, or an aryl group having 6 to 12 carbon atoms.

R³ to R⁶ in the general formula (II-I), the general formula (II-II), and/or the general formula (II-III) each preferably represent a methyl group.

The linear or branched alkylene group represented by R⁷ in -R⁷O-, -R⁷COO-, -R⁷NH-, -R⁷NR⁸-, -COO-, -S-, -R⁷COO-R⁹-O-, or -R⁷O-R¹⁰-O- represented by Y is, for example, an alkylene group having 1 to 8 carbon atoms, preferably 1 to 5 carbon atoms, and the cyclic alkylene group represented by R⁷ is, for example, a cycloalkylene group having 5 to 15 carbon atoms, preferably 5 to 10 carbon atoms.

The aryl-substituted alkylene group represented by R⁷ may have a substituent, such as an alkoxy group or an alkyl group, on its aromatic ring, and a specific structure thereof may be, for example, a structure represented by the following general formula (i) or (ii). When the block has the aryl-substituted alkylene group, the alkylene group is bonded to Si. 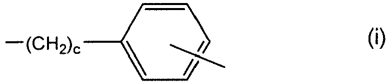 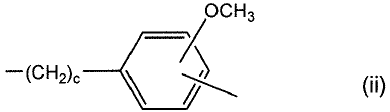 wherein c represents a positive integer and typically represents an integer of from 1 to 6.

The diarylene group represented by any one of R⁷, R⁹, and R¹⁰ refers to a group in which two arylene groups are linked to each other directly or through a divalent organic group, and is specifically a group having a structure represented by -Ar¹-W-Ar²-. Here, Ar¹ and Ar² each represent an arylene group, and W represents a single bond or a divalent organic group. Examples of the divalent organic group represented by W include an isopropylidene group, a methylene group, a dimethylene group, and a trimethylene group.

Examples of the arylene group represented by any one of R⁷, Ar¹, and Ar² include arylene groups each having 6 to 14 ring-forming carbon atoms, such as a phenylene group, a naphthylene group, a biphenylene group, and an anthrylene group. Those arylene groups may each have an arbitrary substituent, such as an alkoxy group or an alkyl group.

The alkyl group represented by R⁸ is a linear or branched group having 1 to 8, preferably 1 to 5 carbon atoms. The alkenyl group represented by R⁸ is, for example, a linear or branched group having 2 to 8, preferably 2 to 5 carbon atoms. The aryl group represented by R⁸ is, for example, a phenyl group or a naphthyl group. The aralkyl group represented by R⁸ is, for example, a phenylmethyl group or a phenylethyl group.

The linear, branched, or cyclic alkylene group represented by R¹⁰ is the same as that represented by R⁷.

Y preferably represents -R⁷O-. R⁷ preferably represents an aryl-substituted alkylene group, in particular a residue of a phenol-based compound having an alkyl group, and more preferably represents an organic residue derived from allylphenol or an organic residue derived from eugenol.

With regard to p and q in the formula (II-II), it is preferred that p=q, i.e., p=(n-2)/2 and q=(n-2)/2.

In addition, β represents a divalent group derived from a diisocyanate compound, or a divalent group derived from a dicarboxylic acid or a halide of a dicarboxylic acid, and examples thereof include divalent groups represented by the following general formulae (iii) to (vii).

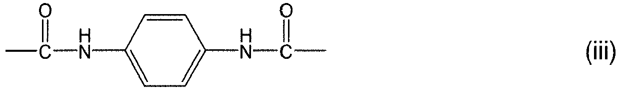

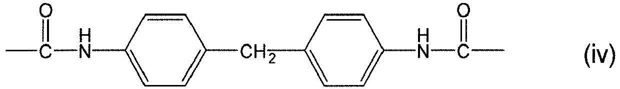

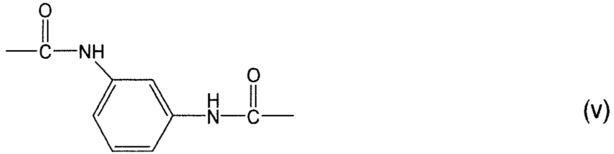

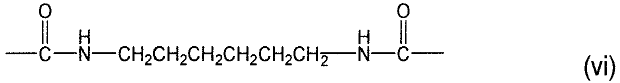

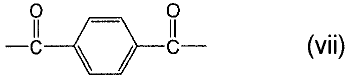

The PC-POS copolymer (A-1) can be produced by a known production method, such as an interfacial polymerization method (phosgene method), a pyridine method, or an ester exchange method. Particularly in the case of the interfacial polymerization method, a step of separating an organic phase containing the PC-POS copolymer and an aqueous phase containing an unreacted product, a catalyst residue, or the like becomes easier, and hence the separation of the organic phase containing the PC-POS copolymer and the aqueous phase in each washing step based on alkali washing, acid washing, or pure water washing becomes easier. Accordingly, the PC-POS copolymer is efficiently obtained. With regard to a method of producing the PC-POS copolymer, reference can be made to, for example, a method disclosed in JP 2010-241943 A.

Specifically, the PC-POS copolymer can be produced by: dissolving an aromatic polycarbonate oligomer produced in advance to be described later and a polyorganosiloxane in a water-insoluble organic solvent (e.g., methylene chloride); adding a solution of a dihydric phenol-based compound (e.g., bisphenol A) in an aqueous alkaline compound (e.g., aqueous sodium hydroxide) to the solution; and subjecting the mixture to an interfacial polycondensation reaction through the use of a tertiary amine (e.g., triethylamine) or a quaternary ammonium salt (e.g., trimethylbenzylammonium chloride) as a polymerization catalyst in the presence of an end terminator (a monohydric phenol, such as *p*-*t*-butylphenol). In addition, the PC-POS copolymer can also be produced by copolymerizing the polyorganosiloxane and a dihydric phenol, and phosgene, a carbonate, or a chloroformate.

A polyorganosiloxane represented by the following general formula (1), general formula (2), and/or general formula (3) can be used as the polyorganosiloxane serving as a raw material: 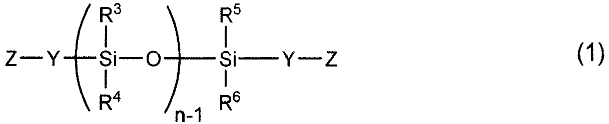 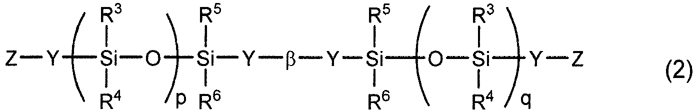 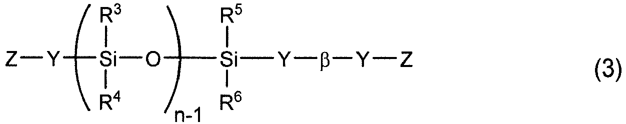 wherein
R³ to R⁶, Y, β, n, p, and q are as described above, and specific examples and preferred examples thereof are also the same as those described above, and
Z represents a hydrogen atom or a halogen atom, and a plurality of Z's may be identical to or different from each other.

Examples of the polyorganosiloxane represented by the general formula (1) include compounds each represented by any one of the following general formulae (1-1) to (1-11). 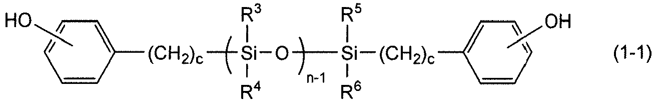 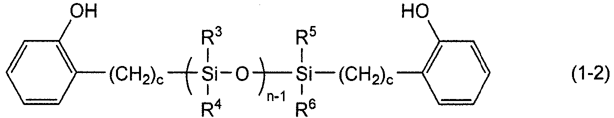 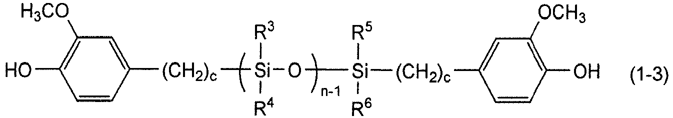 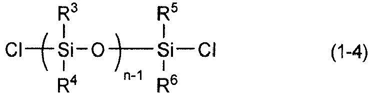 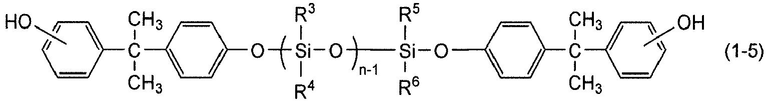 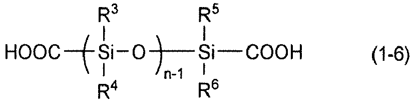 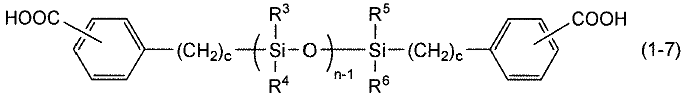 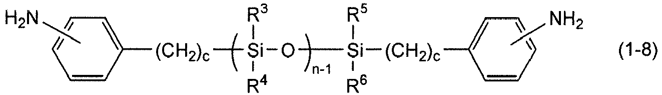 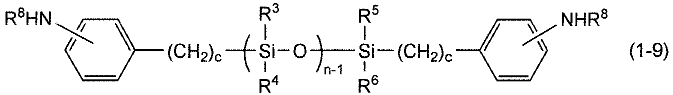 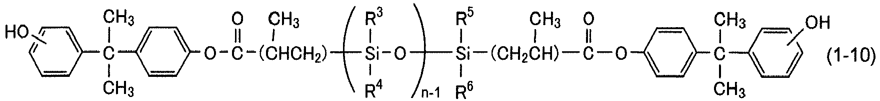 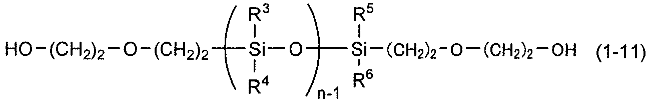 In the general formulae (1-1) to (1-11), R³ to R⁶, n, and R⁸ are as defined above, and preferred examples thereof are also the same as those described above, and c represents a positive integer and typically represents an integer of from 1 to 6.

Among them, a phenol-modified polyorganosiloxane represented by the general formula (1-1) is preferred from the viewpoint of the ease of polymerization. In addition, an *α*,*ω*-bis[3-(*o*-hydroxyphenyl)propyl]polydimethylsiloxane serving as one kind of compound represented by the general formula (1-2) or an *α,ω*-bis[3-(4-hydroxy-3-methoxyphenyl)propyl]polydimethylsiloxane serving as one kind of compound represented by the general formula (1-3) is preferred from the viewpoint of the ease of availability.

A method of producing the polyorganosiloxane is not particularly limited. According to, for example, a method disclosed in JP 11-217390 A, a crude polyorganosiloxane can be obtained by: causing cyclotrisiloxane and disiloxane to react with each other in the presence of an acid catalyst to synthesize *α*,*ω*-dihydrogen organopentasiloxane; and then subjecting the *α*,*ω*-dihydrogen organopentasiloxane to an addition reaction with, for example, a phenolic compound (e.g., 2-allylphenol, 4-allylphenol, eugenol, or 2-propenylphenol) in the presence of a catalyst for a hydrosilylation reaction. In addition, according to a method disclosed in JP 2662310 B2, the crude polyorganosiloxane can be obtained by: causing octamethylcyclotetrasiloxane and tetramethyldisiloxane to react with each other in the presence of sulfuric acid (acid catalyst); and subjecting the resultant *α*,*ω*-dihydrogen organopolysiloxane to an addition reaction with the phenolic compound or the like in the presence of the catalyst for a hydrosilylation reaction in the same manner as that described above. The *α*,*ω*-dihydrogen organopolysiloxane may be used after its chain length n has been appropriately adjusted in accordance with its polymerization conditions, or a commercial *α*,*ω*-dihydrogen organopolysiloxane may be used.

Examples of the catalyst for a hydrosilylation reaction include transition metal-based catalysts. Among them, a platinum-based catalyst is preferably used in terms of a reaction rate and selectivity. Specific examples of the platinum-based catalyst include chloroplatinic acid, an alcohol solution of chloroplatinic acid, an olefin complex of platinum, a complex of platinum and a vinyl group-containing siloxane, platinum-supported silica, and platinum-supported activated carbon.

The crude polyorganosiloxane is preferably brought into contact with an adsorbent to cause the adsorbent to adsorb and remove a transition metal derived from a transition metal-based catalyst in the crude polyorganosiloxane, the catalyst having been used as the catalyst for a hydrosilylation reaction.

An adsorbent having an average pore diameter of, for example, 1,000 Å or less can be used as the adsorbent. When the average pore diameter is 1,000 Å or less, the transition metal in the crude polyorganosiloxane can be efficiently removed. From such viewpoint, the average pore diameter of the adsorbent is preferably 500 Å or less, more preferably 200 Å or less, still more preferably 150 Å or less, still further more preferably 100 Å or less. In addition, from the same viewpoint, the adsorbent is preferably a porous adsorbent.

Although the adsorbent is not particularly limited as long as the adsorbent has the above-mentioned average pore diameter, for example, activated clay, acid clay, activated carbon, synthetic zeolite, natural zeolite, activated alumina, silica, a silica-magnesia-based adsorbent, diatomaceous earth, or cellulose can be used, and at least one kind selected from the group consisting of activated clay, acid clay, activated carbon, synthetic zeolite, natural zeolite, activated alumina, silica, and a silica-magnesia-based adsorbent is preferred.

After the adsorbent has been caused to adsorb the transition metal in the crude polyorganosiloxane, the adsorbent can be separated from the polyorganosiloxane by arbitrary separating means. Examples of the means for separating the adsorbent from the polyorganosiloxane include a filter and centrifugal separation. When the filter is used, a filter, such as a membrane filter, a sintered metal filter, or a glass fiber filter, can be used. Among them, a membrane filter is particularly preferably used.

The average particle diameter of the adsorbent is typically from 1 µm to 4 mm, preferably from 1 µm to 100 µm from the viewpoint that the adsorbent is separated from the polyorganosiloxane after the adsorption of the transition metal.

When the adsorbent is used, its usage amount is not particularly limited. The porous adsorbent can be used in an amount in the range of preferably from 1 part by mass to 30 parts by mass, more preferably from 2 parts by mass to 20 parts by mass with respect to 100 parts by mass of the crude polyorganosiloxane.

When the crude polyorganosiloxane to be treated has so high a molecular weight that the polyorganosiloxane is not in a liquid state, the polyorganosiloxane may be heated to such a temperature as to be in a liquid state at the time of the performance of the adsorption with the adsorbent and the separation of the adsorbent. Alternatively, the adsorption and the separation may be performed after the polyorganosiloxane has been dissolved in a solvent, such as methylene chloride or hexane.

The polycarbonate oligomer can be produced by a reaction between a dihydric phenol and a carbonate precursor, such as phosgene or triphosgene, in an organic solvent, such as methylene chloride, chlorobenzene, or chloroform. When the polycarbonate oligomer is produced by using an ester exchange method, the oligomer can be produced by a reaction between the dihydric phenol and a carbonate precursor, such as diphenyl carbonate.

A dihydric phenol represented by the following general formula (viii) is preferably used as the dihydric phenol: 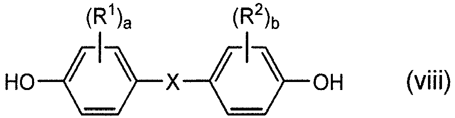 wherein R¹, R², a, b, and X are as described above.

Examples of the dihydric phenol represented by the general formula (viii) include: bis(hydroxyphenyl)alkane-based dihydric phenols, such as 2,2-bis(4-hydroxyphenyl)propane [bisphenol A], bis(4-hydroxyphenyl)methane, 1,1-bis(4-hydroxyphenyl)ethane, and 2,2-bis(4-hydroxy-3,5-dimethylphenyl)propane; 4,4'-dihydroxydiphenyl; bis(4-hydroxyphenyl)cycloalkanes; bis(4-hydroxyphenyl) oxide; bis(4-hydroxyphenyl) sulfide; bis(4-hydroxyphenyl) sulfone; bis(4-hydroxyphenyl) sulfoxide; and bis(4-hydroxyphenyl) ketone. Those dihydric phenols may be used alone or as a mixture thereof.

Among them, bis(hydroxyphenyl)alkane-based dihydric phenols are preferred, and bisphenol A is more preferred. When bisphenol A is used as the dihydric phenol, the PC-POS copolymer is such that in the general formula (I), X represents an isopropylidene group and a=b=0.

Examples of the dihydric phenol except bisphenol A include bis(hydroxyaryl)alkanes, bis(hydroxyaryl)cycloalkanes, dihydroxyaryl ethers, dihydroxydiaryl sulfides, dihydroxydiaryl sulfoxides, dihydroxydiaryl sulfones, dihydroxydiphenyls, dihydroxydiaryl fluorenes, and dihydroxydiaryl adamantanes. Those dihydric phenols may be used alone or as a mixture thereof.

Examples of the bis(hydroxyaryl)alkanes include bis(4-hydroxyphenyl)methane, 1,1-bis(4-hydroxyphenyl)ethane, 2,2-bis(4-hydroxyphenyl)butane, 2,2-bis(4-hydroxyphenyl)octane, bis(4-hydroxyphenyl)phenylmethane, bis(4-hydroxyphenyl)diphenylmethane, 2,2-bis(4-hydroxy-3-methylphenyl)propane, bis(4-hydroxyphenyl)naphthylmethane, 1,1-bis(4-hydroxy-3-*t*-butylphenyl)propane, 2,2-bis(4-hydroxy-3-bromophenyl)propane, 2,2-bis(4-hydroxy-3,5-dimethylphenyl)propane, 2,2-bis(4-hydroxy-3-chlorophenyl)propane, 2,2-bis(4-hydroxy-3,5-dichlorophenyl)propane, and 2,2-bis(4-hydroxy-3,5-dibromophenyl)propane.

Examples of the bis(hydroxyaryl)cycloalkanes include 1,1-bis(4-hydroxyphenyl)cyclopentane, 1,1-bis(4-hydroxyphenyl)cyclohexane, 1,1-bis(4-hydroxyphenyl)-3,5,5-trimethylcyclohexane, 2,2-bis(4-hydroxyphenyl)norbornane, and 1,1-bis(4-hydroxyphenyl)cyclododecane. Examples of the dihydroxyaryl ethers include 4,4'-dihydroxydiphenyl ether and 4,4'-dihydroxy-3,3'-dimethylphenyl ether.

Examples of the dihydroxydiaryl sulfides include 4,4'-dihydroxydiphenyl sulfide and 4,4'-dihydroxy-3,3'-dimethyldiphenyl sulfide. Examples of the dihydroxydiaryl sulfoxides include 4,4'-dihydroxydiphenyl sulfoxide and 4,4'-dihydroxy-3,3'-dimethyldiphenyl sulfoxide. Examples of the dihydroxydiaryl sulfones include 4,4'-dihydroxydiphenyl sulfone and 4,4'-dihydroxy-3,3'-dimethyldiphenyl sulfone.

An example of the dihydroxydiphenyls is 4,4'-dihydroxydiphenyl. Examples of the dihydroxydiarylfluorenes include 9,9-bis(4-hydroxyphenyl)fluorene and 9,9-bis(4-hydroxy-3-methylphenyl)fluorene. Examples of the dihydroxydiaryladamantanes include 1,3-bis(4-hydroxyphenyl)adamantane, 2,2-bis(4-hydroxyphenyl)adamantane, and 1,3-bis(4-hydroxyphenyl)-5,7-dimethyladamantane.

Examples of dihydric phenols except those described above include 4,4'-[1,3-phenylenebis(1-methylethylidene)]bisphenol, 10,10-bis(4-hydroxyphenyl)-9-anthrone, and 1,5-bis(4-hydroxyphenylthio)-2,3-dioxapentane.

In order to adjust the molecular weight of the PC-POS copolymer to be obtained, an end terminator may be used. Examples of the end terminator include monohydric phenols, such as phenol, *p*-cresol, *p-tert*-butylphenol, *p-tert*-octylphenol, *p*-cumylphenol, *p*-nonylphenol, *m*-pentadecylphenol, and *p*-*tert*-amylphenol. Those monohydric phenols may be used alone or in combination thereof.

After the interfacial polycondensation reaction, the PC-POS copolymer can be obtained by appropriately leaving the resultant at rest to separate the resultant into an aqueous phase and an organic solvent phase [separating step], washing the organic solvent phase (preferably washing the phase with a basic aqueous solution, an acidic aqueous solution, and water in the stated order) [washing step], concentrating the resultant organic phase [concentrating step], and drying the concentrated phase [drying step].

### <Aromatic Polycarbonate Resin (A-2) except Component (A-1)>

In the polycarbonate resin composition of the present invention, a product obtained by a conventional production method for an aromatic polycarbonate, such as an interfacial polymerization method or a pyridine method, can be used as the component (A-2) serving as an aromatic polycarbonate except the component (A-1). The interfacial polymerization method involves: causing a dihydric phenol-based compound and phosgene to react with each other in the presence of an organic solvent inert to the reaction and an alkaline aqueous solution; and after the reaction, adding a polymerization catalyst, such as a tertiary amine or a quaternary ammonium salt, to perform polymerization. The pyridine method involves: dissolving the dihydric phenol-based compound in pyridine or a mixed solution of pyridine and the inert solvent; and introducing phosgene to produce the product directly.

Examples of the dihydric phenol-based compound to be used in the production of the aromatic polycarbonate (A-2) include: bis(hydroxyaryl)alkanes, such as 2,2-bis(4-hydroxyphenyl)propane (commonly called bisphenol A), bis(4-hydroxyphenyl)methane, 1,1-bis(4-hydroxyphenyl)ethane, 2,2-bis(4-hydroxyphenyl)butane, 2,2-bis(4-hydroxyphenyl)octane, bis(4-hydroxyphenyl)phenylmethane, bis(4-hydroxyphenyl)diphenylmethane, 2,2-bis(4-hydroxy-3-methylphenyl)propane, bis(4-hydroxyphenyl)naphthylmethane, 1,1-bis(4-hydroxy-3-*t*-butylphenyl)propane, 2,2-bis(4-hydroxy-3-bromophenyl)propane, 2,2-bis(4-hydroxy-3,5-dimethylphenyl)propane, 2,2-bis(4-hydroxy-3-chlorophenyl)propane, 2,2-bis(4-hydroxy-3,5-dichlorophenyl)propane, and 2,2-bis(4-hydroxy-3,5-dibromophenyl)propane; bis(hydroxyaryl)cycloalkanes, such as 1,1-bis(4-hydroxyphenyl)cyclopentane, 1,1-bis(4-hydroxyphenyl)cyclohexane, 1,1-bis(4-hydroxyphenyl)-3,5,5-trimethylcyclohexane, 2,2-bis(4-hydroxyphenyl)norbornane, and 1,1-bis(4-hydroxyphenyl)cyclododecane; dihydroxyaryl ethers, such as 4,4'-dihydroxyphenyl ether and 4,4'-dihydroxy-3,3'-dimethylphenyl ether; dihydroxydiaryl sulfides, such as 4,4'-dihydroxydiphenyl sulfide and 4,4'-dihydroxy-3,3'-dimethyldiphenyl sulfide; dihydroxydiaryl sulfoxides, such as 4,4'-dihydroxydiphenyl sulfoxide and 4,4'-dihydroxy-3,3'-dimethyldiphenyl sulfoxide; dihydroxydiaryl sulfones, such as 4,4'-dihydroxydiphenyl sulfone and 4,4'-dihydroxy-3,3'-dimethyldiphenyl sulfone; dihydroxydiphenyls, such as 4,4'-dihydroxydiphenyl; dihydroxydiarylfluorenes, such as 9,9-bis(4-hydroxyphenyl)fluorene and 9,9-bis(4-hydroxy-3-methylphenyl)fluorene; bis(4-hydroxyphenyl)diphenylmethane; dihydroxydiaryladamantanes, such as 1,3-bis(4-hydroxyphenyl)adamantane, 2,2-bis(4-hydroxyphenyl)adamantane, and 1,3-bis(4-hydroxyphenyl)-5,7-dimethyladamantane; 4,4'-[1,3-phenylenebis(1-methylethylidene)]bisphenol; 10,10-bis(4-hydroxyphenyl)-9-anthrone; and 1,5-bis(4-hydroxyphenylthio)-2,3-dioxapentaene. Those dihydric phenols may be used alone or as a mixture thereof.

A molecular weight modifier, an end terminator, and the like may be used as required in the production of the aromatic polycarbonate (A-2). Any one of the various modifiers, terminators, and the like typically used in the polymerization of polycarbonate resins can be used as the molecular weight modifier, the end terminator, and the like.

Specific examples of the molecular weight modifier include monohydric phenols, such as phenol, *o-n*-butylphenol, *m-n*-butylphenol, *p*-*n*-butylphenol, *o*-isobutylphenol, *m*-isobutylphenol, *p*-isobutylphenol, *o*-*t*-butylphenol, *m*-*t*-butylphenol, *p*-*t*-butylphenol, *o-n*-pentylphenol, *m-n*-pentylphenol, *p*-*n*-pentylphenol, *o-n*-hexylphenol, *m-n*-hexylphenol, *p-n*-hexylphenol, *p*-*t*-octylphenol, *o*-cyclohexylphenol, *m*-cyclohexylphenol, *p*-cyclohexylphenol, *o*-phenylphenol, *m*-phenylphenol, *p*-phenylphenol, *o*-*n*-nonylphenol, *m-n*-nonylphenol, *p*-*n*-nonylphenol, *o*-cumylphenol, *m*-cumylphenol, *p*-cumylphenol, *o*-naphthylphenol, *m*-naphthylphenol, *p*-naphthylphenol, 2,5-di-*t*-butylphenol, 2,4-di-*t*-butylphenol, 3,5-di-*t*-butylphenol, 2,5-dicumylphenol, 3,5-dicumylphenol, *p*-cresol, bromophenol, tribromophenol, monoalkyl phenols each having a linear or branched alkyl group with an average carbon atom number of from 12 to 35 at an ortho-, meta-, or para-position, 9-(4-hydroxyphenyl)-9-(4-methoxyphenyl)fluorene, 9-(4-hydroxy-3-methylphenyl)-9-(4-methoxy-3-methylphenyl)fluorene, and 4-(1-adamantyl)phenol.

Among those monohydric phenols, *p*-*t*-butylphenol, *p*-cumylphenol, *p*-phenylphenol, or the like is preferred. In addition, those compounds may be used alone or in combination thereof.

As the end terminator, a monocarboxylic acid and a derivative thereof and a monohydric phenol may be used. Examples of such end terminator may include *p*-*tert*-butyl-phenol, *p*-phenylphenol, *p*-cumylphenol, *p*-perfluorononylphenol, *p*-(perfluorononylphenyl)phenol, *p*-(perfluorohexylphenyl)phenol, *p*-*tert*-perfluorobutylphenol, 1-(*p*-hydroxybenzyl)perfluorodecane, *p-*[2-(1*H*,*1H*-perfluorotridodecyloxy)-1,1,1,3,3,3-hexafluoropropyl]phenol, 3,5-bis(perfluorohexyloxycarbonyl)phenol, perfluorododecyl *p*-hydroxybenzoate, *p*-(1*H*,1*H*-perfluorooctyloxy)phenol, 2*H*,2*H*,9*H*-perfluorononanoic acid, and 1,1,1,3,3,3-hexafluoro-2-propanol.

Further, a branching agent can be used to turn the dihydric phenol-based compound into a branched polycarbonate. The addition amount of the branching agent is preferably from 0.01 mol% to 3 mol%, more preferably from 0.1 mol% to 1.0 mol% with respect to the dihydric phenol-based compound.

Examples of the branching agent include compounds each having three or more functional groups, such as 1,1,1-tris(4-hydroxyphenyl)ethane, 4,4'-[1-[4-[1-(4-hydroxyphenyl)-1-methylethyl]phenyl]ethylidene]bisphenol, α,α',α"-tris(4-hydroxyphenyl)-1,3,5-triisopropylbenzene, 1-[α-methyl-α-(4'-hydroxyphenyl)ethyl]-4-[α',α'-bis(4"-hydroxyphenyl)ethyl]benzene, phloroglucin, trimellitic acid, and isatinbis(o-cresol).

The aromatic polycarbonate (A-2) is preferably a bisphenol A homopolycarbonate from the viewpoint of improving the impact characteristic and surface dielectric breakdown-resisting characteristic of the composition.

The viscosity-average molecular weight (Mv) of the aromatic polycarbonate (A-2) is preferably from 10,000 to 40,000, more preferably from 13,000 to 35,000, still more preferably from 15,000 to 30,000 from the viewpoint of a balance between the strength and rigidity of a molded article.

### <Blending Ratios of Component (A-1) and Component (A-2)>

The content of the component (A-1) in (A) the resin mixture formed of the component (A-1) and the component (A-2) is from 30 mass% to 100 mass%, preferably from 45 mass% to 100 mass%, more preferably from 60 mass% to 100 mass%. Meanwhile, the content of the component (A-2) is from 70 mass% to 0 mass%, preferably from 55 mass% to 0 mass%, more preferably from 40 mass% to 0 mass%.

When the content of the component (A-1) is less than 30 mass% or the content of the component (A-2) exceeds 70 mass%, the content of the polyorganosiloxane moiety serving as the repeating unit represented by the general formula (II) needs to be increased at the time of the production of the component (A-1) for increasing the content of the polyorganosiloxane moiety in (A) the resin mixture to improve the impact characteristic of the composition. However, when the content of the polyorganosiloxane moiety is increased at the time of the production of the component (A-1), the homogeneity of the reaction may reduce in the polymerizing step, and the separability of a polymer and washing water may deteriorate in the step of washing the polymer. Accordingly, the productivity of the component (A-1) largely reduces.

### [(B) Silsesquioxane]

In the present invention, the silsesquioxane is blended as the component (B) for providing a resin composition excellent in all of an impact characteristic, a surface dielectric breakdown-resisting characteristic, and flame retardancy. When the component (B) and the component (C) are used in combination with (A) the resin mixture containing the PC-POS copolymer (A-1), a resin composition having such extremely excellent flame retardancy as to be capable of achieving the rank "V-0" in the UL standard 94 even when its thickness is 0.7 mm while having an excellent impact characteristic and an excellent surface dielectric breakdown-resisting characteristic can be obtained.

Examples of the structure of the silsesquioxane that can be used in the present invention include ladder-type, network-type, cage-type, and random structures each having a siloxane bond (Si-O-Si bond) as a main chain skeleton. A polyorganosilsesquioxane containing a reactive functional group, such as an alkoxysilyl group, such as a methoxysilyl group, an ethoxysilyl group, or a propoxysilyl group, a chlorosilyl group, a silanol group, or a silanolate group, is also permitted.

The silsesquioxane may be, for example, a silsesquioxane having a structure represented by the following general formula (4): 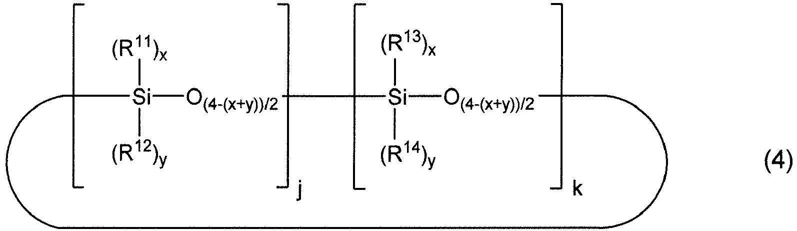 wherein R¹¹ represents HO-A-R-, A represents an arylene group having 6 to 12 carbon atoms, R represents an alkylene group having 1 to 6 carbon atoms and R is bonded to a Si atom, A may further have a substituent, a plurality of R¹¹'s may be identical to or different from each other, R¹², R¹³, and R¹⁴ each independently represent an alkyl group having 1 to 6 carbon atoms, a phenyl group, and/or a trimethylsiloxy group, and a plurality of R¹²'s, R¹³'s, or R¹⁴'s may be identical to or different from each other, x represents a number of 1 or more and less than 2, y represents a number of 0 or more and 1 or less, and x+y is 1 or more and 2 or less, j represents a number of 4 or more and 16 or less, and k represents a number of 0 or more and 8 or less.

For example, when x=1, y=0, and x+y is 1, the silsesquioxane can take a cage-type siloxane structure.

The content of (B) the silsesquioxane is from 0.08 part by mass to 0.3 part by mass, preferably from 0.09 part by mass to 0.2 part by mass, more preferably from 0.10 part by mass to 0.15 part by mass with respect to 100 parts by mass of (A) the resin mixture. When the content is 0.08 part by mass or more, excellent flame retardancy can be expressed. In addition, when the content is 0.3 part by mass or less, a sufficient impact characteristic and a sufficient surface dielectric breakdown-resisting characteristic are obtained.

In addition, the mass ratio "(B)/(C)" of the component (B) to the component (C) is preferably from 70/30 to 50/50, more preferably from 65/35 to 52/48, still more preferably from 62/38 to 55/45. When the ratio is set to fall within the range, an excellent flame retardancy-improving effect can be exhibited without reductions in impact characteristic and surface dielectric breakdown-resisting characteristic of the composition.

In the present invention, a commercially available product "Si-476" (manufactured by Double Bond Chem. Ind., Co., Ltd.), which is a mixed product of (B) the silsesquioxane and (C) the organic sulfonic acid alkaline metal salt (sodium p-toluenesulfonate), and the like may be suitably used.

### [(C) Organic Sulfonic Acid Alkaline (Earth) Metal Salt]

In the present invention, the alkaline metal salt and/or alkaline earth metal salt of the organic sulfonic acid (hereinafter sometimes referred to as "organic sulfonic acid alkaline (earth) metal salt") is blended as the component (C) into the composition for improving its flame retardancy.

The organic sulfonic acid alkaline (earth) metal salt is an alkaline metal salt or alkaline earth metal salt of an organic sulfonic acid having at least one carbon atom, though examples thereof include various salts. Among them, sodium *p*-toluenesulfonate is particularly preferred because the combined use thereof with (B) the silsesquioxane can further improve the flame retardancy without reducing the surface dielectric breakdown-resisting characteristic. In addition, the organic acid metal salts may be used alone or in combination thereof.

Examples of the organic sulfonic acid include an alkylsulfonic acid, benzenesulfonic acid, an alkylbenzenesulfonic acid, diphenylsulfonic acid, naphthalenesulfonic acid, 2,5-dichlorobenzenesulfonic acid, 2,4,5-trichlorobenzenesulfonic acid, diphenylsulfone-3-sulfonic acid, diphenylsulfone-3,3'-disulfonic acid, naphthalenetrisulfonic acid, and fluorine-substituted products of these acids, and a polystyrenesulfonic acid.

Among them, an alkylbenzenesulfonic acid, a perfluoroalkanesulfonic acid, diphenylsulfonic acid, and a polystyrenesulfonic acid are preferred, and an alkylbenzenesulfonic acid, a perfluoroalkanesulfonic acid, and a polystyrenesulfonic acid are more preferred.

Examples of the alkaline metal salt include salts of metals such as sodium, potassium, lithium, and cesium, and examples of the alkaline earth metal salt include salts of metals such as magnesium, calcium, strontium, and barium. Among those salts of metals, a sodium, potassium, or cesium salt is preferred, and sodium is more preferred.

The component (C) is preferably an alkaline metal salt and/or alkaline earth metal salt of an alkylbenzenesulfonic acid, a perfluoroalkanesulfonic acid, or a polystyrenesulfonic acid.

The alkali (earth) metal salt of a perfluoroalkanesulfonic acid is, for example, a salt represented by the following general formula (5):

(C_{d}F_{2d+1}SO₃)ₑM (5)

wherein
in the formula (5), d represents an integer of from 1 to 10, M represents an alkaline metal, such as lithium, sodium, potassium, or cesium, or an alkaline earth metal, such as magnesium, calcium, strontium, or barium, and e represents the valence of M.

For example, metal salts disclosed in JP 47-40445 B correspond to those metal salts.

Examples of the perfluoroalkanesulfonic acid represented by the general formula (5) include perfluoromethanesulfonic acid, perfluoroethanesulfonic acid, perfluoropropanesulfonic acid, perfluorobutanesulfonic acid, perfluoromethylbutanesulfonic acid, perfluorohexanesulfonic acid, perfluoroheptanesulfonic acid, and perfluorooctanesulfonic acid. A sodium, potassium, or cesium salt of any such perfluoroalkanesulfonic acid is preferably used.

The alkaline (earth) metal salt of the polystyrene sulfonic acid is, for example, an alkaline (earth) metal salt of a sulfonate group-containing aromatic vinyl-based resin represented by the following general formula (6): 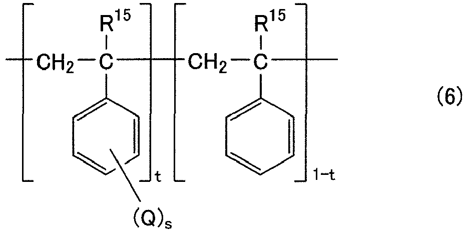 wherein
in the formula (6), Q represents a sulfonate group, R¹⁵ represents a hydrogen atom or a hydrocarbon group having 1 to 10 carbon atoms, s represents an integer of from 1 to 5, and t represents a molar fraction and falls within the range of 0<t≤1.

In this case, the sulfonate group Q is an alkaline metal salt and/or alkaline earth metal salt of a sulfonic acid, and examples of the metals include alkaline metals, such as sodium, potassium, lithium, rubidium, and cesium; and alkaline earth metals, such as beryllium, magnesium, calcium, strontium, and barium. Among them, a sodium, potassium, or cesium salt is preferred, and a sodium salt is more preferred.

In addition, R¹⁵ represents a hydrogen atom or a hydrocarbon group having 1 to 10 carbon atoms, preferably a hydrogen atom or a methyl group.

In the formula, s represents an integer of from 1 to 5 and t satisfies a relationship of 0<t≤1. Therefore, the metal salt may contain an aromatic ring that is totally substituted or partially substituted with the sulfonate group (Q).

The content of (C) the organic acid metal salt is from 0.05 part by mass to 0.2 part by mass, preferably from 0.05 part by mass to 0.15 part by mass, more preferably from 0.06 part by mass to 0.10 part by mass with respect to 100 parts by mass of (A) the resin mixture. When the content is set to fall within the range, sufficient flame retardancy can be obtained.

### [(D) Polytetrafluoroethylene (PTFE)]

In the present invention, the polytetrafluoroethylene (hereinafter sometimes referred to as "fibrillated PTFE") having a fibril-forming ability is blended as the component (D) for imparting a melt dripping-preventing effect to the resin composition to improve its flame retardancy. The use of the polytetrafluoroethylene having a fibril-forming ability provides sufficient flame retardancy and a sufficient surface dielectric breakdown-resisting characteristic.

Herein, the term "fibril-forming ability" refers to a state showing a tendency to be fibrous by resins being bound through an external action such as a shear force.

The PTFE having a fibril-forming ability has an extremely high molecular weight, and has a number-average molecular weight of generally 500,000 or more, preferably from 500,000 to 15,000,000, more preferably from 1,000,000 to 10,000,000, which is determined from a standard specific gravity.

Such PTFE may be obtained, for example, by subjecting tetrafluoroethylene to polymerization in an aqueous solvent in the presence of sodium, potassium, or ammonium peroxydisulfide under a pressure of from 6.9 kPa to 690 kPa (from 1 psi to 100 psi) at a temperature of from 0°C to 200°C, preferably from 20°C to 100°C.

In the polymerization, a fluorine-containing olefin, such as hexafluoropropylene, chlorotrifluoroethylene, a fluoroalkylethylene, or a perfluoroalkyl vinyl ether, or a fluorine-containing alkyl (meth)acrylate, such as a perfluoroalkyl (meth)acrylate, may be used as a component for copolymerization in such a range that the characteristics of the polytetrafluoroethylene are not impaired. The content of such component for copolymerization is preferably 10 mass% or less with respect to tetrafluoroethylene in the polytetrafluoroethylene.

The PTFE is preferably a PTFE particle from the viewpoint of homogeneous dispersion into the polycarbonate. The particle diameter of the PTFE particle is generally 10 µm or less, preferably from 0.05 µm to 1.0 µm.

Examples of commercially available products of the component (D) include "Teflon (trademark) 6-J" (product name, manufactured by Du Pont-Mitsui Fluorochemicals Company, Ltd.), "POLYFLON D-1" and "POLYFLON F-103" (product names, manufactured by Daikin Industries, Ltd.), "CD076" and "CD097E" (product names, manufactured by Asahi Glass Co., Ltd.), "Algoflon F5" (product name, manufactured by Montefluos), "POLYFLON MPA" and "POLYFLON FA-100" (product names, manufactured by Daikin Industries, Ltd.), and "METABLEN A-3750" and "METABLEN A-3800" (product names, manufactured by Mitsubishi Rayon Co., Ltd.).

Those PTFEs may be used alone or in combination thereof.

The blending amount of (D) the PTFE is from 0 parts by mass to 0.3 part by mass, preferably from 0.001 part by mass to 0.25 part by mass, more preferably from 0.01 part by mass to 0.2 part by mass, still more preferably from 0.01 part by mass to 0.1 part by mass with respect to 100 parts by mass of (A) the resin mixture. In the case where the amount is 0.3 part by mass or less, even when the thickness of the composition is 0.7 mm, the rank "V-0" can be achieved in the UL standard 94, and hence its flame retardancy becomes sufficient.

### [(E) Titanium Dioxide]

In the present invention, the titanium dioxide is blended as the component (E) for obtaining an excellent balance between the impact characteristic and surface dielectric breakdown-resisting characteristic of the composition.

Examples of the titanium dioxide include various kinds of titanium dioxide. Among them, titanium dioxide particles each having, on its outermost surface, a coating layer formed of a polyol free of a nitrogen atom (hereinafter sometimes simply referred to as "titanium dioxide particles") are suitable from the viewpoint that a sufficient impact characteristic of the resin composition is obtained.

The primary particle diameters of such titanium dioxide particles are each preferably from 0.05 µm to 0.5 µm, more preferably from 0.1 µm to 0.4 µm, still more preferably from 0.15 µm to 0.3 µm.

It has been known that in the surface treatment of the titanium dioxide particles with an organic compound, their surfaces are coated with, for example, an organosilicon compound, alkanolamines, and higher fatty acids. However, the titanium dioxide particles each having, on its outermost surface, the coating layer formed of the polyol free of a nitrogen atom are particularly preferred from the foregoing viewpoint.

The surface of each of the titanium dioxide particles to be used in the present invention may be coated with a hydrous oxide and/or oxide of at least one kind of element containing an element such as aluminum, silicon, magnesium, zirconia titanium, or tin, before the surface of each of the titanium dioxide particles is coated with the polyol free of a nitrogen atom.

The polyol free of a nitrogen atom with which the outermost surface of each of the titanium dioxide particles is coated is preferably at least one kind selected from the group consisting of trimethylolpropane, trimethylolethane, ditrimethylolpropane, trimethylolpropane ethoxylate, and pentaerythritol. Among them, at least one kind selected from the group consisting of trimethylolpropane and trimethylolethane is preferred from viewpoint that a sufficient impact characteristic is obtained. Those polyols may be used alone or in combination thereof.

A method of coating the outermost surface of each of the titanium dioxide particles with the polyol free of a nitrogen atom is, for example, a wet method or a dry method. The wet method involves adding titanium dioxide to a mixed liquid of the polyol free of a nitrogen atom and a low-boiling point solvent, stirring the mixture, and removing the low-boiling point solvent after the stirring to coat the outermost surface of each particle of the titanium dioxide with the polyol. The dry method involves mixing the polyol free of a nitrogen atom and titanium dioxide in a mixer, such as a Henschel mixer or a tumbler, or spraying titanium dioxide with a mixed solution prepared by dissolving or dispersing the polyol free of a nitrogen atom in a solvent, to coat the outermost surface of each particle of the titanium dioxide with the polyol.

With regard to a method of producing the titanium dioxide, one produced by any one of a chlorine method and a sulfuric acid method can be used. In addition, any one of a rutile-type crystalline structure and an anatase-type crystalline structure can be used for the titanium dioxide, but the rutile-type crystalline structure is preferred from the viewpoints of, for example, the heat stability and light fastness of the polycarbonate resin composition.

The blending amount of (E) the titanium dioxide is from 1 part by mass to 10 parts by mass, preferably from 2 parts by mass to 8 parts by mass, more preferably from 2.5 parts by mass to 6 parts by mass with respect to 100 parts by mass of (A) the resin mixture. When the amount is 1 part by mass or more, a sufficient surface dielectric breakdown-resisting characteristic is obtained, and when the amount is 10 parts by mass or less, a sufficient impact characteristic is obtained.

### [(F) Carbon Black]

In the present invention, the carbon black is blended as the component (F) because the component improves the surface dielectric breakdown-resisting characteristic of the composition to enable the composition to be suitably used as a structure member for solar photovoltaic power generation.

The carbon black is preferably acidic carbon black having a pH of 6 or less from the viewpoint of the maintenance of the surface dielectric breakdown-resisting characteristic, and the pH is more preferably 4 or less. A commercially available product can be used as such acidic carbon black and is, for example, "MA100R" (manufactured by Mitsubishi Chemical Corporation, pH: 3.5).

The blending amount of (F) the carbon black is from 0.1 part by mass to 3 parts by mass, preferably from 0.3 part by mass to 2 parts by mass, more preferably from 0.5 part by mass to 1.5 parts by mass with respect to 100 parts by mass of (A) the resin mixture. When the amount is 0.1 part by mass or more, the composition can be molded into a black molded article suitable as a structure member for solar photovoltaic power generation. In addition, when the amount is 3 parts by mass or less, a sufficient surface dielectric breakdown-resisting characteristic is obtained.

### [(G) Antioxidant]

In the present invention, the antioxidant is preferably further incorporated as the component (G) for preventing the deterioration of the resin composition and maintaining its impact characteristic, stability, heat resistance, and other mechanical characteristics.

The antioxidant is preferably a halogen-free antioxidant from the viewpoints of an environment and safety. Among such antioxidants, a phosphorus-based antioxidant, a phenol-based antioxidant, and the like are preferably used, and the phosphorus-based antioxidant is more preferably used from the viewpoint that more excellent processing stability can be imparted to the resin composition. The antioxidants may be used alone or in combination thereof.

A phosphite-based antioxidant and a phosphine-based antioxidant are each preferred as the phosphorus-based antioxidant from the viewpoint of suppressing the occurrence of, for example, the discoloration of the resin composition even when retained at high temperature.

Examples of the phosphite-based antioxidant and the phosphine-based antioxidant include triphenyl phosphite, diphenyl nonyl phosphite, diphenyl (2-ethylhexyl) phosphite, tris(2,4-di-*tert*-butylphenyl) phosphite, trisnonylphenyl phosphite, diphenyl isooctyl phosphite, 2,2'-methylenebis(4,6-di-*tert*-butylphenyl)octyl phosphite, diphenyl isodecyl phosphite, diphenyl mono(tridecyl) phosphite, phenyl diisodecyl phosphite, phenyl di(tridecyl) phosphite, tris(2-ethylhexyl) phosphite, tris(isodecyl) phosphite, tris(tridecyl) phosphite, dibutyl hydrogen phosphite, trilauryl trithiophosphite, tetrakis(2,4-di-*tert*-butylphenyl)-4,4'-biphenylene diphosphonite, 4,4'-isopropylidene diphenol dodecyl phosphite, 4,4'-isopropylidene diphenol tridecyl phosphite, 4,4'-isopropylidene diphenol tetradecyl phosphite, 4,4'-isopropylidene diphenol pentadecyl phosphite, 4,4'-butylidenebis(3-methyl-6-*tert-*butylphenyl)ditridecyl phosphite, 1,1,3-tris(2-methyl-4-tridecyl phosphite-5-*tert-*butylphenyl)butane, bis(2,4-di-*tert*-butylphenyl)pentaerythritol diphosphite, 3,4:5,6-dibenzo-1,2-oxaphosphane-2-oxide, triphenylphosphine, diphenylbutylphosphine, diphenyloctadecylphosphine, tris(*p*-tolyl)phosphine, tris(*p*-nonylphenyl)phosphine, tris(naphthyl)phosphine, diphenyl(hydroxymethyl)phosphine, diphenyl(acetoxymethyl) phosphine, diphenyl(β-ethylcarboxyethyl)phosphine, tris(*p*-chlorophenyl)phosphine, tris(*p*-fluorophenyl)phosphine, diphenylbenzylphosphine, diphenyl-p-cyanoethylphosphine, diphenyl(*p*-hydroxyphenyl)phosphine, diphenyl-1,4-dihydroxyphenyl-2-phosphine, and phenylnaphthylbenzylphosphine.

Examples of the phenol-based antioxidant include *n*-octadecyl-3-(3,5-di-*tert*-butyl-4-hydroxyphenyl)propionate, 2,6-di-*tert*-butyl-4-methylphenol, 2,2'-methylenebis(4-methyl-6-*tert*-butylphenol), pentaerythritol-tetrakis[3-(3,5-di-*tert*-butyl-4-hydroxyphenyl)propionate], triethylene glycol-bis[3-(3-*tert*-butyl-5-methyl-4-hydroxyphenyl)propionate], 1,6-hexanediol-bis[3-(3,5-di-*tert*-butyl-4-hydroxyphenyl)propionate], 1,3,5-trimethyl-2,4,6-tris(3,5-di-*tert-*butyl-4-hydroxybenzyl)benzene, *N*,*N*-hexamethylenebis(3,5-di-*tert*-butyl-4-hydroxyhydrocinnamide), 3,5-di-*tert*-butyl-4-hydroxy-benzyl phosphonate diethyl ester, tris(3,5-di-*tert*-butyl-4-hydroxybenzyl)isocyanurate, and 3,9-bis{1,1-dimethyl-2-[β-(3-*tert*-butyl-4-hydroxy-5-methylphenyl)propionyloxy]ethyl}-2,4,8,10-tetraoxaspiro(5,5)undecane.

The content of (G) the antioxidant is preferably from 0.01 part by mass to 1 part by mass, more preferably from 0.03 part by mass to 0.50 part by mass, still more preferably from 0.05 part by mass to 0.25 part by mass with respect to 100 parts by mass of (A) the resin mixture. When the content is 0.01 part by mass or more, the heat stability of the composition can be maintained at the time of its molding. In addition, when the content is 1 part by mass or less, the risk of the occurrence of a reduction in molecular weight of the composition is eliminated, and hence its impact characteristic can be further improved.

### [(H) Polyorganosiloxane]

In the present invention, the polyorganosiloxane is preferably further incorporated as the component (H) for preventing the deterioration of the resin composition and maintaining its impact characteristic, stability, heat resistance, and other mechanical characteristics.

Examples of such polyorganosiloxane include, but not particularly limited to, an alkyl hydrogen silicone and an alkoxysilicone.

Examples of the the alkyl hydrogen silicone include methyl hydrogen silicone and ethyl hydrogen silicone. On the other hand, examples of the alkoxysilicone include methoxysilicone and ethoxysilicone.

Among them, an alkoxysilicone is preferred. The alkoxysilicone is a silicone compound containing an alkoxysilyl group in which alkoxy group is bonded to a silicon atom directly or through a divalent hydrocarbon group, and examples thereof include a linear polyorganosiloxane, a cyclic polyorganosiloxane, a network polyorganosiloxane, and a partially branched linear polyorganosiloxane. Among them, a linear polyorganosiloxane is preferred, and a polyorganosiloxane having a molecular structure in which an alkoxy group is bonded to a silicone main chain through a methylene chain is more preferred.

As such component (H), there may be suitably used, for example, commercially available products "SH 1107", "SR 2402", "BY16-160", "BY16-161", "BY16-160E", and "BY16-161E" manufactured by Dow Corning Toray Co., Ltd.

The content of (H) the polyorganosiloxane is preferably from 0.01 part by mass to 1 part by mass, more preferably from 0.03 part by mass to 0.50 part by mass, still more preferably from 0.05 part by mass to 0.25 part by mass with respect to 100 parts by mass of (A) the resin mixture. When the content is 0.01 part by mass or more, the deterioration of the polycarbonate resin hardly occurs and hence a reduction in molecular weight of the resin can be suppressed. In addition, when the content is 1 part by mass or less, balanced economic efficiency is achieved. In addition, silver does not occur on the surface of a molded article and hence the external appearance of the molded article becomes good.

### [Other Additives]

The polycarbonate resin composition of the present invention can be blended with various known additives to be conventionally added to a polycarbonate resin composition as required in such a range that the effects of the present invention are not impaired in addition to the components (A) to (H) described above. Examples of those additives include a reinforcing material, a filler, a stabilizer, a UV absorber, an antistatic agent, a lubricant, a release agent, a dye, a pigment, and any other flame retardant or any other elastomer for an impact characteristic improvement.

The content of those other additives is generally from 0 parts by mass to 1 part by mass, preferably from 0 parts by mass to 0.5 part by mass with respect to 100 parts by mass of (A) the resin mixture.

However, in one preferred embodiment of the polycarbonate resin composition of the present invention, the composition is formed of the components (A) to (F) described above, and is free of any other component. In addition, in another preferred embodiment thereof, the composition is formed of the components (A) to (F) and the component (G) or the component (H) described above, and is free of any other component. In addition, in still another preferred embodiment thereof, the composition is formed of the components (A) to (H) described above, and is free of any other component.

### [Molded Article]

A molded article containing the polycarbonate resin composition of the present invention is obtained by molding a product obtained by blending and kneading the foregoing respective components. The molded article of the present invention is preferably obtained by molding the polycarbonate resin composition of the present invention, and is preferably formed of the polycarbonate resin composition of the present invention.

A method for the kneading is not particularly limited and examples thereof include methods involving using a ribbon blender, a Henschel mixer, a Banbury mixer, a drum tumbler, a single-screw extruder, a twin-screw extruder, a co-kneader, and a multi-screw extruder. In addition, a heating temperature during the kneading is selected from the range of generally from 240°C to 330°C, preferably from 250°C to 320°C.

Various conventionally known molding methods, such as an injection molding method, an injection compression molding method, an extrusion molding method, a blow molding method, a press molding method, a vacuum molding method, and an expansion molding method, can be employed for the molding.

A component to be incorporated except the polycarbonate resin can be melted and kneaded with the polycarbonate resin or the like in advance, i.e., can be added as a master batch.

In addition, the kneaded product is preferably pelletized and subjected to injection molding. A general injection molding method or injection compression molding method, and a special molding method, such as a gas-assisted molding method, can be employed, and hence various molded articles can be produced.

In addition, when the molded article of the present invention is used as an external appearance member, a molding technology for improving an external appearance, such as a heat cycle molding method, a high-temperature mold, or an insulated runner mold, is preferably employed.

In addition, when a part is required to be made flame-retardant, a molding technology such as laminate molding or two-color molding with a resin material having flame retardancy is preferably employed.

Insert molding or outsert molding of a metal part becomes an effective method when using a high-temperature heat source because the insert molding or outsert molding of a metal part can improve the efficiency of heat transfer from the heat source.

In order to obtain a large and thin injection-molded article, injection compression molding, or high-pressure or ultrahigh-pressure injection molding is preferably employed. Partial compression molding or the like can also be employed in the molding of a molded article having a partial thin portion.

### [Structure Member for Solar Photovoltaic Power Generation]

The polycarbonate resin composition of the present invention is excellent in all of an impact characteristic, a surface dielectric breakdown-resisting characteristic, and flame retardancy. Accordingly, a molded article obtained by molding the resin composition is suitable as a structure member for solar photovoltaic power generation, such as a junction box for solar photovoltaic power generation to be installed outdoors.

### EXAMPLES

The present invention is more specifically described by way of Examples below. However, the present invention is not limited to these Examples.

Methods of evaluating polycarbonate resin compositions obtained in Examples and Comparative Examples of the present invention for their performances are as described below.

### [Methods of evaluating Polycarbonate Resin Compositions for their Performances]

### (1) Impact Characteristic (Impact Strength)

A notched Izod impact test was performed in conformity with ASTM D256 at 23°C and -40°C.

### (2) Surface Dielectric Breakdown-resisting Characteristic (Tracking Resistance)

In accordance with the IEC Publication 112 standard, platinum electrodes were placed on the surface of a test piece, and a voltage of 250 V was applied between the electrodes, followed by the dropping of an electrolytic solution at a constant interval. Such a test piece that no tracking occurred across the test piece even after the dropping of 101 or more droplets was regarded as being acceptable and represented by "101<". In the case of such a test piece that tracking occurred before the number of droplets reached 101, the number of droplets at the time of the occurrence was shown in the table.

### (3) Flame Retardancy

A vertical flame test was performed with a test piece (measuring 12.7 mm long by 12.7 mm wide by 0.7 mm thick (in Comparative Example 1, however, 0.8 mm thick)) produced in conformity with the UL standard 94. Its afterflame time was measured and an evaluation was performed by classifying the measured value into the rank "V-0", "V-1", or "V-2".

The UL standard 94 is a method of evaluating a test piece having a predetermined size, which is held vertically, for its flame retardancy on the basis of an afterflame time after the flame of a burner has been brought into contact with the test piece for 10 seconds. A test piece having a shorter afterflame time can be evaluated as being more excellent in flame retardancy.

### Examples 1 to 3 and Comparative Examples 1 to 11

The components (A) to (H) were mixed at a blending ratio shown in Table 1 to provide a polycarbonate resin composition. The components (A) to (H) used here are as described below.

### (A) Resin mixture

### (A-1): PC-POS copolymer

FG1700: product name "TARFLON FG1700", manufactured by Idemitsu Kosan Co., Ltd., polycarbonate-polydimethylsiloxane copolymer, average chain length n of POS moiety = 90, content of POS moiety represented by general formula (II) in component (A-1) = 6 mass%, viscosity-average molecular weight (Mv) = 17,500
FC1760 (comparative): product name "TARFLON FC1760", manufactured by Idemitsu Kosan Co., Ltd., polycarbonate-polydimethylsiloxane copolymer, average chain length n of POS moiety = 40, content of POS moiety represented by general formula (II) in component (A-1) = 6 mass%, viscosity-average molecular weight (Mv) = 17,500 (A-2): Aromatic polycarbonate resin
FN3000A: product name "TARFLON FN3000A", manufactured by Idemitsu Kosan Co., Ltd., bisphenol A homopolycarbonate, viscosity-average molecular weight (Mv) = 29,300
FN2500A: product name "TARFLON FN2500A", manufactured by Idemitsu Kosan Co., Ltd., bisphenol A homopolycarbonate, viscosity-average molecular weight (Mv) = 24,500
FN2200A: product name "TARFLON FN2200A", manufactured by Idemitsu Kosan Co., Ltd., bisphenol A homopolycarbonate, viscosity-average molecular weight (Mv) = 21,500
Mixture of (B) and (C): product name "Si-476", manufactured by Double Bond Chem. Ind., Co., Ltd., mixture of (B) silsesquioxane and (C) sodium *p*-toluenesulfonate (mass ratio (B)/(C) = 60/40)

### (C) Alkaline metal salt of organic sulfonic acid

Na *p*-toluenesulfonate: sodium *p*-toluenesulfonate
KFBS: potassium perfluorobutane sulfonate

### (D) Polytetrafluoroethylene

CD097E: product name "CD-097E", manufactured by Asahi Glass Co., Ltd., polytetrafluoroethylene powder having a fibril-forming ability
A3800: product name "METABLEN A-3800", manufactured by Mitsubishi Rayon Co., Ltd., acrylic-modified polytetrafluoroethylene having a fibril-forming ability

(E) Titanium dioxide: product name "CR60-2", manufactured by Ishihara Sangyo Kaisha, Ltd., titanium dioxide particles having an average particle diameter of 0.21 µm, which are subjected to an organic surface treatment with a polyol (trimethylolpropane) and have outermost surfaces coated with trimethylolpropane
(F) Carbon black: product name "MA100R", manufactured by Mitsubishi Chemical Corporation, acidic carbon black having a pH of 3.5
(G) Antioxidant: product name "Irgafos 168", manufactured by BASF Japan, tris(2,4-di-*tert*-butylphenyl) phosphite
(H) Polyorganosiloxane: product name "BY16-161", manufactured by Dow Corning Toray Co., Ltd., siloxane containing a methoxysilyl group in which a methoxy group is bonded to a silicon atom through a divalent hydrocarbon group

Each of the resultant resin compositions was melted and kneaded with a vented twin-screw extruder (manufactured by Toshiba Machine Co., Ltd., model name: "TEM-35B") at a resin temperature of 290°C to provide a pellet of each polycarbonate resin composition.

The polycarbonate resin composition pellet was subjected to injection molding with an injection molding machine under the molding conditions of a cylinder temperature of 280°C and a mold temperature of 80°C to provide a test piece. The resultant test piece was measured for its impact characteristic at 23°C and -40°C, surface dielectric breakdown-resisting characteristic, and flame retardancy by the foregoing methods. The results are shown in Table 1.

**Table 1**

| | | | | | Comparative Example | Example | | | Comparative Example | | | | | | | | | |
|---|---|---|---|---|---|---|---|---|---|---|---|---|---|---|---|---|---|---|
| | | | | | 1 | 1 | 2 | 3 | 2 | 3 | 4 | 5 | 6 | 7 | 8 | 9 | 10 | 11 |
| | (A) Resin mixture | | | | | | | | | | | | | | | | | |
| | | (A-1) | FG1700 | X ^{*1} | 70.5 | 70.5 | 70.5 | 70.5 | 70.5 | 70.5 | 70.5 | - | - | 70.5 | 70.5 | 70.5 | 70.5 | 70.5 |
| | | PC-POS | FC1760 (Comparative) | % ^{*1} | - | - | - | - | - | - | - | 70.5 | - | - | - | - | - | - |
| | | (A-2) PC | FN3000A | % ^{*1} | 15.8 | 15.8 | 15.8 | 15.8 | 15.8 | 15.8 | 15.8 | 15.8 | - | 15.8 | 15.8 | 15.8 | 15.8 | 15.8 |
| | | | FN2500A | % ^{*1} | 13.7 | 13.7 | 13.7 | 13.7 | 13.7 | 13.7 | 13.7 | 13.7 | - | 13.7 | 13.7 | 13.7 | 13.7 | 13.7 |
| | | | FN2200A | % ^{*1} | - | - | - | - | - | - | - | - | 100 | - | - | - | - | - |
| | Mixture of (B) and (C) ^{*3} | | | | | | | | | | | | | | | | | |
| | | Silsesquioxane+Na *p*-toluenesulfonate | | Part(s) ^{*2} | - | 0.2 | 0.3 | 0.2 | 0.05 | 0.1 | 0.6 | 0.2 | 0.2 | 0.1 | - | - | 0.2 | 0.2 |
| | | (Breakdown: blending amount of (B)) | | | | (0.12) | (0.18) | (0.12) | (0.03) | (0.06) | (0.36) | (0.12) | (0.12) | (0.06) | | | (0.12) | (0.12) |
| | | (Breakdown: blending amount of (C)) | | | | (0.08) | (0.12) | (0.08) | (0.02) | (0.04) | (0.24) | (0.08) | (0.08) | (0.04) | | | (0.08) | (0.08) |
| Resin composition | (C) | Alkaline metal salt of organic sulfonic acid | | | | | | | | | | | | | | | | |
| | | | Na *p*-toluenesulfonate | Part(s) ^{*2} | - | - | - | - | - | - | - | - | - | 0.02 | - | 0.08 | - | - |
| | | | KFBS | Part(s) ^{*2} | 0.05 | - | - | - | - | - | - | - | - | - | 0.08 | - | - | - |
| | (D) | Polytetrafluoroethylene | | | | | | | | | | | | | | | | |
| | | | CD097E | Part(s) ^{*2} | 0.15 | 0.2 | 0.2 | 0.05 | 0.2 | 0.2 | 0.2 | 0.2 | 0.2 | 0.2 | 0.2 | 0.2 | - | 0.6 |
| | | | A3800 | Part(s) ^{*2} | - | - | - | - | - | - | - | - | - | - | - | - | 0.35 | - |
| | (E) | Titanium dioxide | | Part(s) ^{*2} | 4.2 | 4.2 | 4.2 | 4.2 | 4.2 | 4.2 | 4.2 | 4.2 | 4.2 | 4.2 | 4.2 | 4.2 | 4.2 | 4.2 |
| | (F) | Carbon black | | Part(s) ^{*2} | 1.1 | 1.1 | 1.1 | 1.1 | 1.1 | 1.1 | 1.1 | 1.1 | 1.1 | 1.1 | 1.1 | 1.1 | 1.1 | 1.1 |
| | (G) | Antioxidant | | Part(s) ^{*2} | 0.1 | 0.1 | 0.1 | 0.1 | 0.1 | 0.1 | 0.1 | 0.1 | 0.1 | 0.1 | 0.1 | 0.1 | 0.1 | 0.1 |
| | (H) | Polyorganosiloxane | | Part(s) ^{*2} | 0.1 | 0.1 | 0.1 | 0.1 | 0.1 | 0.1 | 0.1 | 0.1 | 0.1 | 0.1 | 0.1 | 0.1 | 0.1 | 0.1 |
| Content of POS moiety represented by general formula (II) in (A) (mass%) | | | | | 4.2 | 4.2 | 4.2 | 4.2 | 4.2 | 4.2 | 4.2 | 4.2 | 0 | 4.2 | 4.2 | 4.2 | 4.2 | 4.2 |
| | (1) | Impact strength | Notched Izod impact strength at 23°C | | 76 | 78 | 76 | 76 | 79 | 78 | 74 | 75 | 79 | 77 | 76 | 78 | 75 | 81 |
| | | | Notched Izod impact strength at -40°C | | 50 | 47 | 40 | 46 | 54 | 52 | 28 | 22 | 13 | 51 | 54 | 52 | 41 | 44 |
| Evaluation | (2) | Tracking resistance | CTI, 250 V | | 101 < | 101< | 101< | 101< | 101 < | 101 < | 69 | 84 | 101< | 101 < | 63 | 38 | 83 | 101< |
| | (3) | Flame retardancy | UL94, thickness 0.7 mm | | V-1 ^{*4} | V-0 | V-0 | V-0 | V-2 | V-2 | V-0 | V-0 | V-2 | V-1 | V-1 | V-0 | V-1 | V-1 |
| | | | (Afterflame time (sec)) | | - | (42) | (33) | (14) | (119) | (103) | (41) | (27) | (97) | (50) | (45) | (31) | (48) | (57) |

| | | | | | | | | | | | | | | | | | | |
|---|---|---|---|---|---|---|---|---|---|---|---|---|---|---|---|---|---|---|
| %^{*1}: mass% in (A), Part(s)^{*2}: part(s) by mass with respect to 100 parts by mass of (A), Mixture of (B) and (C)^{*3}: silsesquioxane/Na *p*-toluenesulfonate (mass ratio)=60/40, V-1^{*4}: in Comparative Example 1, the thickness of the test piece was 0.8 mm. | | | | | | | | | | | | | | | | | | |

As can be seen from Table 1, each of the polycarbonate resin compositions of Examples 1 to 3 is excellent in all of the impact strength, the tracking resistance, and the flame retardancy, is excellent particularly in impact strength at a temperature as low as -40°C, and has such extremely excellent flame retardancy as to be capable of achieving the rank "V-0" in the UL standard 94 even when the composition is as thin as 0.7 mm.

Meanwhile, in each of Comparative Examples 1, 8, and 9, which was free of the component (B), excellent tracking resistance and excellent flame retardancy could not be simultaneously achieved. In each of Comparative Examples 8 and 9, the flame retardancy was improved as compared to that in Comparative Example 1, but the tracking resistance reduced as compared to that in Comparative Example 1.

In each of Comparative Examples 2 and 3, the flame retardancy was poor because the contents of the component (B) and the component (C) were small. In Comparative Example 7, the content of the component (C) was increased but the content of the component (B) was small, and hence the flame retardancy was insufficient. In Comparative Example 4, the impact strength and the tracking resistance were poor because the contents of the component (B) and the component (C) were large. That is, as can be seen from Comparative Examples 2 to 4 and 7, when the contents of the component (B) and the component (C) deviate from the specified ranges, the composition cannot be excellent in all of the impact strength, the tracking resistance, and the flame retardancy, and hence the effects of the present invention are not obtained.

In addition, in Comparative Example 5 using the PC-POS copolymer in which the average chain length n of the POS moiety was less than 70, the impact strength and the tracking resistance were poor, and in Comparative Example 6, which was free of any PC-POS copolymer, the impact strength and the flame retardancy were poor.

In addition, in Comparative Example 10, the content of the component (D) was so large that the tracking resistance and the flame retardancy were poor, and in Comparative Example 11, the content of the component (D) was so large that the flame retardancy was poor.

### INDUSTRIAL APPLICABILITY

The polycarbonate resin composition of the present invention is suitable as a material for a structure member for solar photovoltaic power generation, such as a junction box for solar photovoltaic power generation to be installed outdoors, because the composition is excellent in all of an impact characteristic, a surface dielectric breakdown-resisting characteristic, and flame retardancy.

## Claims

1. A polycarbonate resin composition, comprising:
(A) 100 parts by mass of a resin mixture comprising
30 mass% to 100 mass% of a polycarbonate-polyorganosiloxane copolymer (A-1) having a repeating unit represented by the general formula (I) and a repeating unit represented by the general formula (II), and having an average chain length of a polyorganosiloxane moiety of from 70 to 500, and
70 mass% to 0 mass% of an aromatic polycarbonate resin (A-2) except the polycarbonate-polyorganosiloxane copolymer (A-1);
(B) 0.08 part by mass to 0.3 part by mass of a silsesquioxane;
(C) 0.05 part by mass to 0.2 part by mass of an alkaline metal salt and/or an alkaline earth metal salt of an organic sulfonic acid;
(D) 0 parts by mass to 0.3 part by mass of a polytetrafluoroethylene having a fibril-forming ability;
(E) 1 part by mass to 10 parts by mass of titanium dioxide; and
(F) 0.1 part by mass to 3 parts by mass of carbon black: 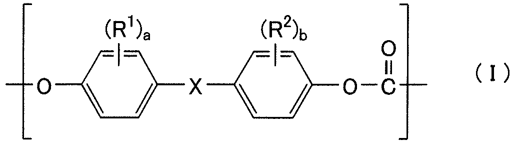 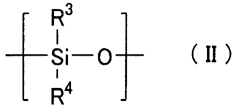 wherein
in the formula (I), R¹ and R² each independently represent an alkyl group or alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, -S-, -SO-, -SO₂-, -O-, or -CO-, and a and b each independently represent an integer of from 0 to 4, and
in the formula (II), R³ and R⁴ each independently represent a hydrogen atom, a halogen atom, an alkyl group having 1 to 6 carbon atoms, an alkoxy group having 1 to 6 carbon atoms, or an aryl group having 6 to 12 carbon atoms.

2. The polycarbonate resin composition according to claim 1, further comprising (G) 0.01 part by mass to 1 part by mass of an antioxidant with respect to 100 parts by mass of (A) the resin mixture.

3. The polycarbonate resin composition according to claim 2, wherein (G) the antioxidant comprises a phosphorus-based antioxidant.

4. The polycarbonate resin composition according to any one of claims 1 to 3, further comprising (H) 0.01 part by mass to 1 part by mass of a polyorganosiloxane with respect to 100 parts by mass of (A) the resin mixture.

5. The polycarbonate resin composition according to any one of claims 1 to 4, wherein a content of the polyorganosiloxane moiety serving as the repeating unit represented by the general formula (II) in the polycarbonate-polyorganosiloxane copolymer (A-1) is from 5 mass% to 20 mass%.

6. The polycarbonate resin composition according to any one of claims 1 to 5, wherein a content of the polyorganosiloxane moiety serving as the repeating unit represented by the general formula (II) in (A) the resin mixture is from 1 mass% to 20 mass%.

7. The polycarbonate resin composition according to any one of claims 1 to 6, wherein the polycarbonate-polyorganosiloxane copolymer (A-1) has a viscosity-average molecular weight of from 12,000 to 30,000.

8. The polycarbonate resin composition according to any one of claims 1 to 7, wherein (E) the titanium dioxide comprises titanium dioxide particles each having, on an outermost surface thereof, a coating layer comprising a polyol free of a nitrogen atom.

9. The polycarbonate resin composition according to claim 8, wherein the polyol free of a nitrogen atom comprises at least one kind selected from the group consisting of trimethylolpropane, trimethylolethane, ditrimethylolpropane, trimethylolpropane ethoxylate, and pentaerythritol.

10. The polycarbonate resin composition according to any one of claims 1 to 9, wherein (C) the alkaline metal salt and/or alkaline earth metal salt of the organic sulfonic acid comprises sodium *p*-toluenesulfonate.

11. The polycarbonate resin composition according to any one of claims 1 to 10, wherein a mass ratio "(B)/(C)" of (B) the silsesquioxane to (C) the alkaline metal salt and/or the alkaline earth metal salt of the organic sulfonic acid is from 70/30 to 50/50.

12. A molded article, comprising the polycarbonate resin composition of any one of claims 1 to 11.

13. A structure member for solar photovoltaic power generation, comprising the molded article of claim 12.

## Patentansprüche

1. Polycarbonatharzzusammensetzung, umfassend:
(A) 100 Masseteile einer Harzmischung, umfassend
30 Massen-% bis 100 Massen-% eines Polycarbonat-Polyorganosiloxan-Copolymers (A-1), das eine Wiederholungseinheit dargestellt durch die allgemeine Formel (I) und eine Wiederholungseinheit dargestellt durch die allgemeine Formel (II) aufweist, und eine durchschnittliche Kettenlänge einer Polyorganosiloxaneinheit von 70 bis 500 aufweist, und
70 Massen-% bis 0 Massen-% eines aromatischen Polycarbonatharzes (A-2), außer dem Polycarbonat-Polyorganosiloxan-Copolymer (A-1);
(B) 0,08 Massenteile bis 0,3 Massenteile eines Silsesquioxans;
(C) 0,05 Massenteile bis 0,2 Massenteile eines Alkalimetallsalzes und/oder eines Erdalkalimetallsalzes einer organischen Sulfonsäure;
(D) 0 Massenteile bis 0,3 Massenteile eines Polytetrafluorethylens mit einer fibrillenbildenden Fähigkeit;
(E) 1 Massenteil bis 10 Massenteile Titandioxid; und
(F) 0,1 Massenteile bis 3 Massenteile Ruß: 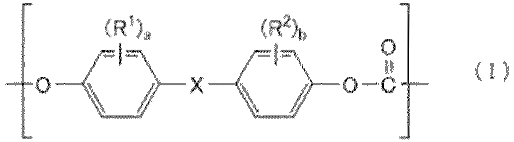 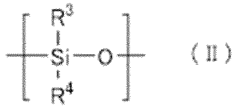 wobei
in der Formel (I), R¹ und R² jeweils unabhängig voneinander eine Alkylgruppe oder Alkoxygruppe mit 1 bis 6 Kohlenstoffatomen darstellen, X eine Einfachbindung, eine Alkylengruppe mit 1 bis 8 Kohlenstoffatomen, eine Alkylidengruppe mit 2 bis 8 Kohlenstoffatomen, eine Cycloalkylengruppe mit 5 bis 15 Kohlenstoffatomen, eine Cycloalkylidengruppe mit 5 bis 15 Kohlenstoffatomen, -S-, -SO-, -SO₂-, -O- oder -CO- darstellt und a und b jeweils unabhängig voneinander eine ganze Zahl von 0 bis 4 darstellen, und
in der Formel (II), R³ und R⁴ jeweils unabhängig voneinander ein Wasserstoffatom, ein Halogenatom, eine Alkylgruppe mit 1 bis 6 Kohlenstoffatomen, eine Alkoxygruppe mit 1 bis 6 Kohlenstoffatomen oder eine Arylgruppe mit 6 bis 12 Kohlenstoffatomen darstellen.

2. Polycarbonatharzzusammensetzung gemäß Anspruch 1, ferner umfassend (G) 0,01 Massenteile bis 1 Massenteil bezogen auf 100 Massenteile der Harzmischung (A) eines Antioxidans.

3. Polycarbonatharzzusammensetzung gemäß Anspruch 2, wobei (G) das Antioxidans ein Antioxidans auf Phosphorbasis umfasst.

4. Polycarbonatharzzusammensetzung gemäß mindestens einem der Ansprüche 1 bis 3, ferner umfassend (H) 0,01 Massenteile bis 1 Massenteil bezogen auf 100 Massenteile der Harzmischung (A) eines Polyorganosiloxans.

5. Polycarbonatharzzusammensetzung gemäß mindestens einem der Ansprüche 1 bis 4, wobei ein Gehalt der Polyorganosiloxaneinheit, die als Wiederholungseinheit dient, die durch die allgemeine Formel (II) im Polycarbonat-Polyorganosiloxan-Copolymer (A-1) dargestellt ist, 5 Masse-% bis 20 Masse-% beträgt.

6. Polycarbonatharzzusammensetzung gemäß mindestens einem der Ansprüche 1 bis 5, wobei ein Gehalt der Polyorganosiloxaneinheit, die als Wiederholungseinheit dient, die durch die allgemeine Formel (II) in (A) dargestellt ist, 1 Masse-% bis 20 Masse-% beträgt.

7. Polycarbonatharzzusammensetzung gemäß mindestens einem der Ansprüche 1 bis 6, wobei das Polycarbonat-Polyorganosiloxan-Copolymer (A-1) ein viskositätsgemitteltes Molekulargewicht von 12.000 bis 30.000 aufweist.

8. Polycarbonatharzzusammensetzung gemäß mindestens einem der Ansprüche 1 bis 7, wobei (E) das Titandioxid Titandioxidpartikel umfasst, die jeweils auf einer ihrer äußersten Oberflächen eine Beschichtung aufweisen, die ein Polyol umfasst, das frei von Stickstoffatomen ist.

9. Polycarbonatharzzusammensetzung gemäß Anspruch 8, wobei das Polyol, das frei von Stickstoffatomen ist, mindestens eines, ausgewählt aus der Gruppe bestehend aus Trimethylolpropan, Trimethylolethan, Ditrimethylolpropan, Trimethylolpropanethoxylat und Pentaerythritol, umfasst.

10. Polycarbonatharzzusammensetzung gemäß mindestens einem der Ansprüche 1 bis 9, wobei (C) das Alkalimetallsalz und/oder das Erdalkalimetallsalz der organischen Sulfonsäure Natrium-p-toluolsulfonat umfasst.

11. Polycarbonatharzzusammensetzung gemäß mindestens einem der Ansprüche 1 bis 10, wobei ein Massenverhältnis "(B)/(C)" (B) des Silsesquioxans zu (C) dem Alkalimetallsalz und/oder dem Erdalkalimetallsalz der organischen Sulfonsäure 70/30 bis 50/50 ist.

12. Geformter Gegenstand, umfassend die Polycarbonatharzzusammensetzung gemäß mindestens einem der Ansprüche 1 bis 11.

13. Strukturelement für solarphotovoltaische Stromerzeugung, umfassend den geformten Gegenstand gemäß Anspruch 12.

## Revendications

1. Composition de résine de polycarbonate, comprenant :
(A) 100 parties en masse d'un mélange de résine comprenant
30 % en masse à 100 % en masse d'un copolymère de polycarbonate-polyorganosiloxane (A-1) présentant une unité de répétition représentée par la formule générale (I) et une unité de répétition représentée par la formule générale (II), et présentant une longueur de chaîne moyenne d'une fraction de polyorganosiloxane de 70 à 500, et
70% en masse à 0% en masse d'une résine de polycarbonate aromatique (A-2) excepté le copolymère de polycarbonate-polyorganosiloxane (A-1) ;
(B) 0,08 partie en masse à 0,3 partie en masse d'un silsesquioxane ;
(C) 0,05 partie en masse à 0,2 partie en masse d'un sel de métal alcalin et/ou d'un sel de métal alcalino-terreux d'un acide sulfonique organique ;
(D) 0 partie en masse à 0,3 partie en masse d'un polytétrafluoroéthylène présentant une aptitude à former des fibrilles ;
(E) 1 partie en masse à 10 parties en masse de dioxyde de titane ; et
(F) 0,1 partie en masse à 3 parties en masse de noir de carbone : 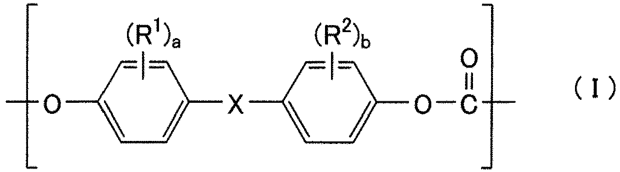 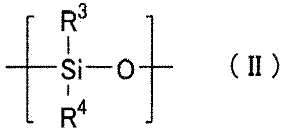 dans laquelle
dans la formule (I), R¹ et R² représentent chacun de manière indépendante un groupe alkyle ou un groupe alcoxy présentant 1 à 6 atomes de carbone, X représente une liaison simple, un groupe alkylène présentant 1 à 8 atomes de carbone, un groupe alkylidène présentant 2 à 8 atomes de carbone, un groupe cycloalkylène présentant 5 à 15 atomes de carbone, un groupe cycloalkylidène présentant 5 à 15 atomes de carbone, -S-, -SO-, -SO₂-, -O-, ou -CO-, et a et b représentent chacun de manière indépendante un nombre entier de 0 à 4, et
dans la formule (II), R³ et R⁴ représentent chacun de manière indépendante un atome d'hydrogène, un atome d'halogène, un groupe alkyle présentant 1 à 6 atomes de carbone, un groupe alcoxy présentant 1 à 6 atomes de carbone, ou un groupe aryle présentant 6 à 12 atomes de carbone.

2. Composition de résine de polycarbonate selon la revendication 1, comprenant en outre (G) 0,01 partie en masse à 1 partie en masse d'un antioxydant par rapport à 100 parties en masse du mélange de résine de (A).

3. Composition de résine de polycarbonate selon la revendication 2, dans laquelle l'antioxydant de (G) comprend un antioxydant à base de phosphore.

4. Composition de résine de polycarbonate selon l'une quelconque des revendications 1 à 3, comprenant en outre (H) 0,01 partie en masse à 1 partie en masse d'un polyorganosiloxane par rapport à 100 parties en masse du mélange de résine de (A).

5. Composition de résine de polycarbonate selon l'une quelconque des revendications 1 à 4, dans laquelle une teneur en fraction de polyorganosiloxane jouant le rôle de l'unité de répétition représentée par la formule générale (II) dans le copolymère de polycarbonate-polyorganosiloxane (A-1) est de 5 % en masse à 20 % en masse.

6. Composition de résine de polycarbonate selon l'une quelconque des revendications 1 à 5, dans laquelle une teneur en fraction de polyorganosiloxane jouant le rôle de l'unité de répétition représentée par la formule générale (II) dans le mélange de résine de (A) est de 1 % en masse à 20 % en masse.

7. Composition de résine de polycarbonate selon l'une quelconque des revendications 1 à 6, dans laquelle le copolymère de polycarbonate-polyorganosiloxane (A-1) présente une masse moléculaire moyenne en viscosité de 12 000 à 30 000.

8. Composition de résine de polycarbonate selon l'une quelconque des revendications 1 à 7, dans laquelle le dioxyde de titane de (E) comprend des particules de dioxyde de titane présentant chacune, sur une surface la plus extérieure de celles-ci, une couche de revêtement comprenant un polyol exempt d'un atome d'azote.

9. Composition de résine de polycarbonate selon la revendication 8, dans laquelle le polyol exempt d'un atome d'azote comprend au moins un type choisi dans le groupe constitué de triméthylolpropane, triméthyloléthane, ditriméthylolpropane, éthoxylate de triméthylolpropane, et pentaérytritol.

10. Composition de résine de polycarbonate selon l'une quelconque des revendications 1 à 9, dans laquelle le sel de métal alcalin et/ou le sel de métal alcalino-terreux de (C) de l'acide sulfonique organique comprend du *p*-toluènesulfonate de sodium.

11. Composition de résine de polycarbonate selon l'une quelconque des revendications 1 à 10, dans laquelle un rapport massique "(B)/(C)" du silsesquioxane de (B) au sel de métal alcalin et/ou sel de métal alcalino-terreux de (C) de l'acide sulfonique organique est de 70/30 à 50/50.

12. Article moulé, comprenant la composition de résine de polycarbonate de l'une quelconque des revendications 1 à 11.

13. Elément de structure pour la génération de puissance photovoltaïque solaire, comprenant l'article moulé de la revendication 12.
